(19) 

Europäisches
Patentamt

European
Patent Office

Office européen
des brevets

(11) **EP 4 402 548 B1**

(12) **EUROPEAN PATENT SPECIFICATION**

(45) Date of publication and mention
of the grant of the patent:
**10.12.2025 Bulletin 2025/50**

(21) Application number: **22801807.3**

(22) Date of filing: **14.10.2022**

(51) International Patent Classification (IPC):
**G05B 23/02** *(2006.01)*      **G06N 3/08** *(2023.01)*
**H02J 13/00** *(2006.01)*      **H02H 7/26** *(2006.01)*
**G05B 19/042** *(2006.01)*

(52) Cooperative Patent Classification (CPC):
**G05B 23/0221; G05B 19/0426; G05B 23/024;
G06N 3/0442; G06N 3/0985; H02H 1/0092;
H02J 3/003; H02J 13/00002; H02J 13/00036;**
H02H 3/40; H02J 2203/20

(86) International application number:
**PCT/EP2022/078651**

(87) International publication number:
**WO 2023/062191 (20.04.2023 Gazette 2023/16)**

(54) **METHOD AND SYSTEM FOR GENERATING A DECISION LOGIC AND ELECTRIC POWER SYSTEM**

VERFAHREN UND SYSTEM ZUR ERZEUGUNG EINER ENTSCHEIDUNGSLOGIK UND STROMVERSORGUNGSSYSTEM

PROCÉDÉ ET SYSTÈME POUR GÉNÉRER UNE LOGIQUE DE DÉCISION ET SYSTÈME D'ALIMENTATION ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.10.2021 EP 21202912**

(43) Date of publication of application:
**24.07.2024 Bulletin 2024/30**

(73) Proprietor: **Hitachi Energy Ltd
8050 Zürich (CH)**

(72) Inventors:
• **DAWIDOWSKI, Pawel
32-010 Malopolskie (PL)**
• **OTTEWILL, James
31-143 Kraków (PL)**
• **CHAKRAVORTY, Jhelum
H3G1Y2 Montreal, Québec (CA)**

(74) Representative: **Vossius & Partner
Patentanwälte Rechtsanwälte mbB
Siebertstraße 3
81675 München (DE)**

(56) References cited:
**US-A1- 2017 344 900      US-A1- 2020 409 323
US-A1- 2021 264 111**

**Description**

FIELD OF THE APPLICATION

Embodiments of the application relate to systems and methods for generating a decision logic and to an electric power system. Embodiments of the application relate in particular to devices and systems for performing asset protection, monitoring or control, and to techniques for generating a decision logic for such devices and/or systems. Embodiments of the application relate to devices, systems, and methods for generating a decision logic that can be used to perform detect a fault and to initiate a corrective, protective, and/or mitigating action in response to a fault detection.

BACKGROUND OF THE APPLICATION

There are a number of applications where it is necessary to include protection, monitoring, and/or control systems in order to prevent major failures. Examples of such applications include, amongst others, power system protection, where protection devices are used to disconnect faulted parts of an electrical network, or process monitoring systems used for identifying anomalous behaviors in an industrial plant which might be indicative of a developing failure. These protection, monitoring, and/or control systems may include high levels of automation due to the fact that decisions might need to be made more quickly than is possible by a human operator, and/or that there are often too many devices (and signals recorded by devices) that must be monitored at any given time.

The automation may include a decision logic which is used to determine whether or not a mitigation action (e.g. tripping a circuit breaker, or signaling an alarm to an operator) is to be triggered. It is important that the correct decision be made as quickly as possible.

Various methods may be used for analyzing time series data for monitoring purposes. In recent years recurrent neural networks (RNNs) have grown in popularity. RNNs such as long-short term memory (LSTM) or gated recurrent unit (GRU) allow machine learning (ML) models to be trained to detect a specific event or situation, with a training set comprised of an input time series and desired output value at each time step. There are several challenges which need to be properly addressed in order to not overfit the ML model, and ensure correct and robust ML model based fault detection or alarm raise.

When critical decisions need to be taken automatically (such as in electric power systems or industrial process control), security, dependability, and speed are key performance indicators. Security (also referred to as selectivity) may relate to restraining from operation for a normal state or for faults out of a protected zone. Dependability (also referred to as sensitivity) means operating in case of a fault inside of the protected zone. For illustration, when a trip decision needs to be taken by a relay or other protection device of an electric power system, there is a need to ensure that fault cases are reliably identified in a timely manner that mitigates the risk of system failure, while reducing or essentially eliminating incorrect trips.

US 2020/409323 A1 relates to systems and methods are directed controlling components of a utility grid.

US 2021/264111 A1 relates to systems and methods for natural language processing (NLP).

US 2017/344900 A1 relates to a method and apparatus for organizing media files using parameters obtained from the visual content and metadata of the media files.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

There is a need in the art for enhanced methods and systems for automatically or semiautomatically generating a decision logic that can be executed by an intelligent electronic device (IED) to automatically take decisions. There is also a need in the art for enhanced methods and systems operative to generate a decision logic that provides enhanced dependability and speed for critical decision making, without requiring human expert knowledge for distinguishing simpler and more challenging training cases during training. There is also a need in the art for enhanced methods and systems operative to generate a decision logic which, in field use, receives time-series input and provides a time-series output, the time-series output being indicative of whether a corrective, protective, and/or mitigating action is to be taken. There is also a need in the art for enhanced devices that execute such a decision logic and/or for enhanced protection methods that employ such a decision logic.

According to the application, methods and systems as recited in the independent claims are provided. The dependent claims define preferred embodiments.

Methods and systems according to embodiments are operative to generate a decision logic by training one or several machine learning (ML) models using a training kernel technique. The training kernels are adjusted automatically during ML model training so that the resulting trained ML model can provide a correct decision as quickly as possible. The speed may generally be dependent on the complexity of the specific training case. Training kernels associated with different training cases may be adjusted independently from each other, respectively in an automated manner that may invoke an objective criterion without being dependent on a human expert classification of the complexity of a training case.

The methods and systems may be used in association with a protection relay to provide power system protection with improved performance. The methods and systems may be used in association with distance protection or time domain protection, with the decision logic being operative to process a time series of input features that are or depend on measured electric characteristics, determine whether a trip is to be performed in a zone for which an intelligent electronic device (IED) that executed the decision logic is responsible, and generate an output that triggers a corrective, protective, and/or mitigating action (such as a circuit breaker (CB) trip). The methods and systems may be used more broadly in association with asset monitoring and control.

A method of generating a decision logic operative to process a time-series input and to generate a decision logic output according to independent claim 1 is provided.

The present application also relates to a method of performing asset protection or monitoring according to independent claim 13.

The decision logic may be a decision logic for an electric power system.

The decision logic may be a function of a protection function.

The decision logic may be a sub-component of a protection function.

The decision logic may be a distance protection or time domain protection logic for an electric power transmission system or a sub-component of these or other protection functions.

The decision logic may be a decision logic for an industrial automation control system.

For each training case, both the target output time series and the weighting function associated with the respective training case may be a function of sample time.

For each training case, the output time-series may have N time-sequential values corresponding to a series of consecutive sample times and the weighting function may have N time-sequential values corresponding to the series of consecutive sample times.

The method may comprise terminating the iterative procedure in response to determining that a termination criterion is fulfilled.

The method may comprise storing an ML model of the at least one ML model trained in the iterative procedure as decision logic for execution by at least one decision-making device, in particular for execution by an IED.

The generating the decision logic may further comprise terminating the iterative procedure in response to determining that a termination criterion is fulfilled. The generating the decision logic may further comprise storing an ML model of the at least one ML model trained in the iterative procedure as decision logic for execution by at least one decision-making device, in particular for execution by an IED.

Selectively modifying the weighting function(s) may comprise modifying weighting functions associated with different training cases independently of each other.

Selectively modifying the weighting function(s) may comprise shifting at least a rising flank of the weighting function associated with a training case relative to sample times of the target output time-series of the training case.

The target output time-series of the training case may change its value at a sample time of the time-series.

The target output time-series of the training case may change its value abruptly at that sample time, e.g., by exhibiting a discontinuity.

The target output time-series of the training case may change its value abruptly from one of a set of discrete possible output values to another one of the set of discrete possible values at the sample time.

Shifting at least the rising flank may comprise reducing a delay of the rising flank of the weighting function relative to the sample time at which the target output time-series changes.

Shifting at least the rising flank may comprise reducing a delay of the rising flank of the weighting function, along a temporal dimension of the sample times, relative to the sample time at which a class indicated by the target output time-series of the training case changes its value.

The weighting function may have weighting function values that, for sample times between the sample time at which the target output time-series changes its value and an onset time of the rising flank of the weighting function, are smaller than weighting function values for sample times prior to the sample time at which the target output time-series changes its value and/or weighting function values for sample times subsequent to the onset time of the rising flank of the weighting function.

The weighting function may be zero for sample times between the sample time at which the target output time-series changes its value and the onset time of the rising flank of the weighting function.

The delay may be decremented in several steps in the iterative procedure.

Selectively modifying the weighting function(s) associated with one or several of the training cases may comprise determining that a modification criterion is fulfilled for the one or several of the training cases.

Selectively modifying the weighting function(s) associated with one or several of the training cases may comprise modifying the weighting function(s) associated with the one or several of the training cases for which the modification criterion is fulfilled.

Determining that the modification criterion is fulfilled may comprise determining that a number of correct classifications of the trained at least one ML model fulfills a threshold comparison criterion.

The threshold comparison criterion may be checked independently for each of several training cases. Weighting functions associated with different training cases may be modified in different iterations of the iterative procedure, depending on when the threshold comparison criterion is fulfilled for the respective training cases.

The weighting functions may comprise first weighting functions associated with training cases in which the target output time-series varies and second weighting functions associated with training cases in which the target output time-series is constant.

Initializing the weighting functions may comprise initializing the first weighting functions to have a dependency on sample time that is different from a dependency on sample time of the second weighting functions.

Initializing the weighting functions may comprise initializing the first weighting functions to vary as a function of sample time.

Initializing the second weighting functions to be constant as a function of sample time.

The first and second weighting functions may be time-continuous functions.

The first weighting functions may be initialized such that a time-integral of each first weighting function depends on a time-integral of each second weighting function, the integrals being respectively computed over a time period representing a period defined by all sample times of the target output time-series of the training cases.

The first and second weighting functions may be time-discrete functions.

The first weighting functions may be initialized such that a sum of values of each first weighting function depends on a sum of values of each second weighting function, the sums being respectively computed by a summation of the weighting function values for all sample times represented by the target output time-series of the training cases.

Each ML model of the at least one ML model may have an input layer operative to receive one or several time series representative of electrical characteristics of an electric power system.

Each ML model of the at least one ML model may have an output layer operative to output a protection command for performing a protective or corrective action for an asset of the electric power system.

Each ML model of the at least one ML model may have at least one recurrent neural network (RNN) layer, such as a long short-term memory (LSTM) layer or gated recurrent unit (GRU) cells.

The decision logic may be a distance protection or time domain protection logic or any subfunction of these or other protection functions.

The one or several time series representative of electrical characteristics may comprise current and/or voltage measurements for one or several phases (e.g., for three phases) or features determined from current and/or voltage measurements for one or several phases. Alternatively or additionally, the one or several time series representative of electrical characteristics may comprise current and/or voltage measurements for a DC grid or features determined from current and/or voltage measurements for a direct current (DC) grid or a hybrid alternating current (AC) - DC grid. Alternatively or additionally, the one or several time series representative of electrical characteristics may comprise current and/or voltage measurements obtained on a distributed energy resource (DER).

These one or several time series may be received by an input layer of a ML model (during training) or of the trained decision logic (during field use).

The protection command may be operative to change between values corresponding to circuit breaker trip and restrain. The protection command may be operative to change between two or more discrete states for a converter and/or coupler (e.g., in a DC grid, such as a high voltage DC grid, or a hybrid AC-DC grid; and/or for a system comprising one or several DERs).

The one or several time series representative of electrical characteristics may comprise measurements of transformer characteristics. The transformer characteristics may include any one or any combination of insulation oil temperature, insulation oil composition, dissolved gas concentration(s) of one or several gases, transformer breather characteristics, transformer breather desiccant characteristics, without being limited thereto. These one or several time series may be received by an input layer of a ML model (during training) or of the trained decision logic (during field use).

The protection command may be operative to change between values corresponding to normal and abnormal transformer conditions.

The one or several time series representative of electrical characteristics may comprise measurements of tap changer and/or tap changer switch characteristics. The tap changer and/or tap changer switch characteristics may include current and/or voltage measurements obtained at at least one terminal of the tap changer and/or tap changer switch, features derived therefrom (such as impedance or admittance), oil characteristics, etc. These one or several time series may be received by an input layer of a ML model (during training) or of the trained decision logic (during field use).

The protection command may be operative to change between values corresponding to different tap changer positions. The protection command may be operative to change between values corresponding to normal and abnormal tap changer and/or tap changer switch positions.

A training step may respectively comprise adjusting parameters of the at least one ML model.

Adjusting the parameters may comprise adjusting one or several of biases, forwarding functions, weights, or other parameters of an artificial neural network (ANN) ML model, in particular, of an RNN.

Adjusting the parameters may comprise adjusting the parameters using an optimization procedure with an objective of reducing the aggregated loss function.

Adjusting the parameters may comprise updating the parameters using gradient descent, stochastic gradient descent (SGD), a nonlinear conjugate gradient technique, a limited-memory Broyden-Fletcher-Goldfarb-Shanno algorithm (L-BFGS), a Levenberg-Marquardt Algorithm (LMA), a population-based training algorithm such as an evolutionary algorithm (EA) or a particle swarm optimization (PSO), without being limited thereto.

The weighted loss function for a training case may be a sum of a modulus of a difference between a value of the target output time-series of the respective training case and a value of the output time-series provided by the ML model responsive to the training input time-series of the respective training case at the respective sample time, multiplied by the weighting function associated with the training case at the respective sample time, with the sum being taken over the sample times.

The aggregated loss function may be a sum of the loss functions weighted by the weighting function, with the sum of the loss functions being computed over the training cases.

Other techniques may be used to compute the loss function and aggregated loss function. For illustration, the loss function may be computed as entropy.

A method of generating a decision logic operative to process a time-series input and to generate a decision logic output may be performed by at least one integrated circuit and may comprise retrieving, from a memory or storage medium, at least one training dataset comprising a plurality of training cases, each training case comprising a training input time-series and a target output time-series. The method may comprise training kernel machine learning procedure to train at least one ML model using the training cases. The training kernel machine learning procedure may comprise automatically modifying, by the at least one integrated circuit, training kernels used to weight loss functions of training cases in the training kernel machine learning procedure.

Automatically adjusting the training kernels may comprise automatically adjusting training kernels associated with different training cases independently of each other.

The decision logic may be a decision logic for an electric power system.

The decision logic may be a distance protection or time domain protection logic for an electric power transmission system.

The decision logic may be a decision logic for an industrial automation control system.

For each training case, both the target output time series and the training kernel function associated with the respective training case may be a function of sample time.

For each training case, the output time-series may have N time-sequential values corresponding to a series of consecutive sample times and the training kernel function may have N time-sequential values corresponding to the series of consecutive sample times.

The method may comprise terminating the training kernel machine learning procedure in response to determining that a termination criterion is fulfilled.

The method may comprise storing an ML model of the at least one ML model trained in the training kernel machine learning procedure as decision logic for execution by at least one decision-making device, in particular, for execution by an IED.

Automatically modifying the training kernels may comprise modifying training kernels associated with different training cases independently of each other.

Automatically modifying the training kernels may comprise shifting at least a rising flank of the training kernel associated with a training case relative to sample times of the target output time-series of the training case.

The target output time-series of the training case may change its value at a sample time of the time-series.

The target output time-series of the training case may change its value abruptly at that sample time, e.g., by exhibiting a discontinuity.

The target output time-series of the training case may change its value abruptly from one of a set of discrete possible output values to another one of the set of discrete possible values at the sample time.

Shifting at least the rising flank may comprise reducing a delay of the rising flank of the training kernel relative to the sample time at which the target output time-series changes its value.

Shifting at least the rising flank may comprise reducing a delay of the rising flank of the weighting function, along a temporal dimension of the sample times, relative to the sample time at which a class indicated by the target output time-series of the training case changes its value.

The training kernel may have training kernel values that, for sample times between the sample time at which the target output time-series changes its value and an onset time of the rising flank of the training kernel, are smaller than training kernel values for sample times prior to the sample time at which the target output time-series changes its value and/or training kernel values for sample times subsequent to the onset time of the rising flank of the training kernel.

The training kernel may be zero for sample times between the sample time at which the target output time-series changes its value of the target output time-series and the onset time of the rising flank of the training kernel.

The delay may be decremented in several steps in the training kernel machine learning procedure, independently for each training case.

Automatically modifying the training kernels may comprise determining that a modification criterion is fulfilled for one or several of the training cases.

Automatically modifying the training kernels may comprise modifying the training kernels for which the modification criterion is fulfilled.

Determining that the modification criterion is fulfilled may comprise determining that a number of correct classifications of the trained at least one ML model fulfills a threshold comparison criterion.

The threshold comparison criterion may be checked independently for each of several training cases. Training kernels associated with different training cases may be modified in different iterations of the training kernel machine learning procedure, depending on when the threshold comparison criterion is fulfilled for the respective training cases.

Training kernels associated with different training cases may be modified independently of each other.

The training kernels may comprise first training kernels associated with training cases in which the target output time-series varies and second training kernels associated with training cases in which the target output time-series is constant.

Initializing the training kernels may comprise initializing the first training kernels to have a dependency on sample time that is different from a dependency on sample time of the second training kernels.

Initializing the training kernels may comprise initializing the first training kernels to vary as a function of sample time and initializing the second training kernels to be constant as a function of sample time.

The first and second training kernels may be time-continuous functions and the first training kernels are initialized such that a time-integral of each first training kernel depends on a time-integral of each second training kernel, the integrals being respectively computed over a time period representing a period defined by all sample times of the target output time-series of the training cases.

The first and second training kernels may be time-discrete functions and the first training kernels are initialized such that a sum of values of each first training kernel depends on a sum of values of each second training kernel, the sums being respectively computed by a summation of the training kernel values for all sample times represented by the target output time-series of the training cases.

Each ML model of the at least one ML model may have an input layer operative to receive one or several time series representative of electrical characteristics of an electric power system.

Each ML model of the at least one ML model may have an output layer operative to output a protection command for performing a protective or corrective action for an asset of the electric power system.

Each ML model of the at least one ML model may have at least one recurrent neural network (RNN) layer, such as a long short-term memory (LSTM) layer or gated recurrent unit (GRU) cells.

The decision logic may be a distance protection or time domain protection logic.

The one or several time series representative of electrical characteristics may comprise current and/or voltage measurements for one or several phases (e.g., for three phases) or features determined from current and/or voltage measurements for one or several phases.

The protection command may be operative to change between values corresponding to circuit breaker trip and restrain.

A training step may respectively comprise adjusting parameters of the at least one ML model.

Adjusting the parameters may comprise adjusting one or several of biases, forwarding functions, weights, or other parameters of an artificial neural network (ANN) ML model, in particular, of an RNN.

Adjusting the parameters may comprise adjusting the parameters using an optimization procedure with an objective of reducing an aggregated loss function that depends on weighted loss functions of at least a sub-set of the training cases, each weighted loss function being respectively weighted by the training kernel associated with the respective training case.

At least some of the training kernels may vary during the iterative training kernel machine learning procedure.

Adjusting the parameters may comprise updating the parameters using gradient descent, stochastic gradient descent (SGD), a nonlinear conjugate gradient technique, a limited-memory Broyden-Fletcher-Goldfarb-Shanno algorithm (L-BFGS), a Levenberg-Marquardt Algorithm (LMA), a population-based training algorithm such as an evolutionary algorithm (EA) or a particle swarm optimization (PSO), without being limited thereto.

The weighted loss function for a training case may be a sum of a modulus of a difference between a value of the target output time-series of the respective training case and a value of the output time-series provided by the ML model responsive to the training input time-series of the respective training case at the respective sample time, multiplied by the training kernel associated with the training case at the respective sample time, with the sum being taken over the sample times.

The aggregated loss function may be a sum of the loss functions weighted by the training kernel, with the sum of the loss functions being computed over the training cases.

Other techniques may be used to compute the loss function and aggregated loss function. For illustration, the loss function may be computed as entropy.

A method of performing asset protection or monitoring according to an aspect comprises generating a decision logic for an intelligent electronic device (IED) using the method according to an embodiment and executing, by the IED, the decision logic, comprising performing corrective, protective, and/or mitigating actions responsive to the decision logic output.

The decision logic may receive one or several measurement time series from one or several measurement devices. The decision logic may process the one or several measurement time-series to generate the decision logic output.

The one or several measurement time series may be representative of electrical characteristics of the asset and/or of components of an electric power generation, transmission, and/or distribution system that comprises the asset or that is coupled to the asset.

The one or several measurement time series may comprise current and/or voltage measurements for one or several phases (e.g., for three phases) or features determined from current and/or voltage measurements for one or several phases. Alternatively or additionally, the one or several measurement time series representative of electrical characteristics may comprise current and/or voltage measurements for a DC grid or features determined from current and/or voltage measurements for a direct current (DC) grid or a hybrid alternating current (AC) - DC grid. Alternatively or additionally, the one or several measurement time series representative of electrical characteristics may comprise current and/or voltage measurements obtained on a distributed energy resource (DER). These one or several measurement time series may be received by an input layer of the trained decision logic.

The corrective, protective, and/or mitigating action may comprise controlling the asset or at least one component of an electric power generation, transmission, and/or distribution system that comprises the asset or that is coupled to the asset.

The corrective, protective, and/or mitigating action may comprise controlling an output interface. The output interface may be provided at a control center.

The corrective, protective, and/or mitigating action may comprise selectively causing a circuit breaker to trip.

The corrective, protective, and/or mitigating action may comprise controlling a converter and/or coupler (e.g., in a DC grid, such as a high voltage DC grid, or a hybrid AC-DC grid; and/or for a system comprising one or several DERs).

The one or several measurement time series may comprise measurements of transformer characteristics. The transformer characteristics may include any one or any combination of insulation oil temperature, insulation oil composition, dissolved gas concentration(s) of one or several gases, transformer breather characteristics, transformer breather desiccant characteristics, without being limited thereto. These one or several time series may be received by an input layer of the decision logic.

The corrective, protective, and/or mitigating action may comprise controlling the transformer or a circuit breaker connected to a transformer input and/or output. The corrective, protective, and/or mitigating action may comprise controlling a tap changer for the transformer.

The one or several measurement time series representative of electrical characteristics may comprise measurements of tap changer and/or tap changer switch characteristics. The tap changer and/or tap changer switch characteristics may include current and/or voltage measurements obtained at at least one terminal of the tap changer and/or tap changer switch, features derived therefrom (such as impedance or admittance), oil characteristics, etc. These one or several time series may be received by an input layer of the decision logic.

The corrective, protective, and/or mitigating action may comprise controlling the tap changer to change a tap changer position and/or controlling the tap changer switch.

The IED may have an output operative to output at least one control signal to effect the corrective, protective, and/or mitigating action.

The method may comprise storing the decision logic in a memory or storage device of the IED for execution by the IED, or otherwise deploying the decision logic to the IED.

The IED may be a relay.

The IED may be a distance protection or time domain protection relay for an electric power transmission system.

A method of generating and/or preparing an intelligent electronic device (IED) for field use comprises generating a decision logic for an intelligent electronic device (IED) using the method according to an embodiment and storing the decision logic in a memory or storage device of the IED for execution by the IED, or otherwise deploying the decision logic to the IED.

The decision logic may receive one or several measurement time series from one or several measurement devices. The decision logic may process the one or several measurement time-series to generate the decision logic output.

The one or several measurement time series may be representative of electrical characteristics of the asset and/or of components of an electric power generation, transmission, and/or distribution system that comprises the asset or that is coupled to the asset.

The one or several measurement time series may comprise current and/or voltage measurements for one or several phases (e.g., for three phases) or features determined from current and/or voltage measurements for one or several phases. Alternatively or additionally, the one or several measurement time series representative of electrical characteristics may comprise current and/or voltage measurements for a DC grid or features determined from current and/or voltage measurements for a direct current (DC) grid or a hybrid alternating current (AC) - DC grid. Alternatively or additionally, the one or several measurement time series representative of electrical characteristics may comprise current and/or voltage measurements obtained on a distributed energy resource (DER). These one or several measurement time series may be received by an input layer of the trained decision logic.

The corrective, protective, and/or mitigating action may comprise controlling the asset or at least one component of an electric power generation, transmission, and/or distribution system that comprises the asset or that is coupled to the asset.

The corrective, protective, and/or mitigating action may comprise controlling an output interface. The output interface may be provided at a control center.

The corrective, protective, and/or mitigating action may comprise selectively causing a circuit breaker to trip.

The corrective, protective, and/or mitigating action may comprise controlling a converter and/or coupler (e.g., in a DC grid, such as a high voltage DC grid, or a hybrid AC-DC grid; and/or for a system comprising one or several DERs).

The one or several measurement time series may comprise measurements of transformer characteristics. The transformer characteristics may include any one or any combination of insulation oil temperature, insulation oil composition, dissolved gas concentration(s) of one or several gases, transformer breather characteristics, transformer breather desiccant characteristics, without being limited thereto. These one or several time series may be received by an input layer of the decision logic.

The corrective, protective, and/or mitigating action may comprise controlling the transformer or a circuit breaker connected to a transformer input and/or output. The corrective, protective, and/or mitigating action may comprise controlling a tap changer for the transformer.

The one or several measurement time series representative of electrical characteristics may comprise measurements of tap changer and/or tap changer switch characteristics. The tap changer and/or tap changer switch characteristics may include current and/or voltage measurements obtained at at least one terminal of the tap changer and/or tap changer switch, features derived therefrom (such as impedance or admittance), oil characteristics, etc. These one or several time series may be received by an input layer of the decision logic.

The corrective, protective, and/or mitigating action may comprise controlling the tap changer to change a tap changer position and/or controlling the tap changer switch.

The IED may have an output operative to output at least one control signal to effect the corrective, protective, and/or mitigating action.

The IED may be a relay.

The IED may be a distance protection or time domain protection relay for an electric power transmission system.

Computer-executable instruction code comprises instructions that, when executed by at least one integrated circuit, cause the at least one integrated circuit to perform the method according to an embodiment.

A storage medium has stored thereon computer-executable instructions that, when executed by at least one integrated circuit, cause the at least one integrated circuit to perform the method according to an embodiment.

A system for generating a decision logic operative to process a time-series input and to generate a decision logic output according to independent claim 14 is provided.

The present application also relates to an electric power system according to independent claim 15.

There is provided a system comprising an interface to retrieve at least one training dataset comprising a plurality of training cases, each training case comprising a training input time-series and a target output time-series, and at least one integrated circuit operative to perform the method according to an embodiment.

The system may be operative to generate a decision logic for an electric power system.

The system may be operative to generate a distance protection or time domain protection logic for an electric power transmission system.

The system may be operative to generate a decision logic for an industrial automation control system

The system may be operative to terminate the iterative procedure in response to determining that a termination criterion is fulfilled.

The system may be operative to cause an ML model of the at least one ML model trained in the iterative procedure to be stored as decision logic for execution by at least one decision-making device, in particular, for execution by an IED.

The system may be operative such that selectively modifying the weighting function(s) may comprise modifying weighting functions associated with different training cases independently of each other.

The system may be operative such that selectively modifying the weighting function(s) may comprise shifting at least a rising flank of the weighting function associated with a training case relative to sample times of the target output time-series of the training case.

The system may be operative such that the target output time-series of the training case may change its value at a sample time of the time-series.

The target output time-series of the training case may change its value abruptly at that sample time, e.g., by exhibiting a discontinuity.

The target output time-series of the training case may change its value abruptly from one of a set of discrete possible output values to another one of the set of discrete possible values at the sample time.

The system may be operative such that shifting at least the rising flank may comprise reducing a delay of the rising flank of the weighting function relative to the sample time at which the target output time-series changes its value.

The system may be operative such that shifting at least the rising flank may comprise reducing a delay of the rising flank of the weighting function, along a temporal dimension of the sample times, relative to the sample time at which a class indicated by the target output time-series of the training case changes its value.

The system may be operative such that the weighting function may have weighting function values that, for sample times between the sample time at which the target output time-series changes its value and an onset time of the rising flank of the weighting function, are smaller than weighting function values for sample times prior to the sample time at which the target output time-series changes its value and/or weighting function values for sample times subsequent to the onset time of the rising flank of the weighting function.

The system may be operative such that the weighting function may be zero for sample times between the sample time at which the target output time-series changes its value of the target output time-series and the onset time of the rising flank of the weighting function.

The system may be operative such that the delay may be decremented in several steps in the iterative procedure.

The system may be operative such that selectively modifying the weighting function(s) associated with one or several of the training cases may comprise determining that a modification criterion is fulfilled for the one or several of the training cases.

The system may be operative such that selectively modifying the weighting function(s) associated with one or several of the training cases may comprise modifying the weighting function(s) associated with the one or several of the training cases for which the modification criterion is fulfilled.

The system may be operative such that determining that the modification criterion is fulfilled may comprise determining that a number of correct classifications of the trained at least one ML model fulfills a threshold comparison criterion.

The system may be operative such that the threshold comparison criterion may be checked independently for each of several training cases. Weighting functions associated with different training cases may be modified in different iterations of the iterative procedure, depending on when the threshold comparison criterion is fulfilled for the respective training cases.

The system may be operative such that the weighting functions may comprise first weighting functions associated with training cases in which the target output time-series varies and second weighting functions associated with training cases in which the target output time-series is constant.

The system may be operative such that initializing the weighting functions may comprise initializing the first weighting functions to have a dependency on sample time that is different from a dependency on sample time of the second weighting functions.

The system may be operative such that initializing the weighting functions may comprise initializing the first weighting functions to vary as a function of sample time and initializing the second weighting functions to be constant as a function of sample time.

The system may be operative such that the first and second weighting functions may be time-continuous functions and the first weighting functions are initialized such that a time-integral of each first weighting function depends on a time-integral of each second weighting function, the integrals being respectively computed over a time period representing a period defined by all sample times of the target output time-series of the training cases.

The system may be operative such that the first and second weighting functions may be time-discrete functions and the first weighting functions are initialized such that a sum of values of each first weighting function depends on a sum of values of each second weighting function, the sums being respectively computed by a summation of the weighting function values for all sample times represented by the target output time-series of the training cases.

The system may be operative such that each ML model of the at least one ML model may have an input layer operative to receive one or several time series representative of electrical characteristics of an electric power system.

The system may be operative such that each ML model of the at least one ML model may have an output layer operative to output a protection command for performing a protective or corrective action for an asset of the electric power system.

The system may be operative such that each ML model of the at least one ML model may have at least one recurrent neural network (RNN) layer, such as a long short-term memory (LSTM) layer or gated recurrent unit (GRU) cells.

The system may be operative such that the one or several time series representative of electrical characteristics may comprise current and/or voltage measurements for one or several phases (e.g., for three phases) or features determined from current and/or voltage measurements for one or several phases.

The system may be operative such that the protection command may be operative to change between values corresponding to circuit breaker trip and restrain.

The system may be operative such that a training step may respectively comprise adjusting parameters of the at least one ML model.

The system may be operative such that adjusting the parameters may comprise adjusting one or several of biases, forwarding functions, weights, or other parameters of an artificial neural network (ANN) ML model, in particular, of an RNN.

The system may be operative such that adjusting the parameters may comprise adjusting the parameters using an optimization procedure with an objective of reducing the aggregated loss function.

The system may be operative such that adjusting the parameters may comprise updating the parameters using gradient descent, stochastic gradient descent (SGD), a nonlinear conjugate gradient technique, a limited-memory Broyden-Fletcher-Goldfarb-Shanno algorithm (L-BFGS), a Levenberg-Marquardt Algorithm (LMA), a population-based training algorithm such as an evolutionary algorithm (EA) or a particle swarm optimization (PSO), without being limited thereto.

The system may be operative such that the weighted loss function for a training case may be a sum of a modulus of a difference between a value of the target output time-series of the respective training case and a value of the output time-series provided by the ML model responsive to the training input time-series of the respective training case at the respective sample time, multiplied by the weighting function associated with the training case at the respective sample time, with the sum being taken over the sample times.

The system may be operative such that the aggregated loss function may be a sum of the loss functions weighted by the weighting function, with the sum of the loss functions being computed over the training cases.

The system may be operative such that other techniques may be used to compute the loss function and aggregated loss function. For illustration, the loss function may be computed as entropy.

An intelligent electronic device (IED) according to an embodiment comprises at least one integrated circuit operative to execute a decision logic generated by a method or system according to an embodiment.

The IED may be operative to perform at least one action (e.g., a corrective and/or protective action) responsive to a decision logic output.

The decision logic may receive one or several measurement time series from one or several measurement devices. The decision logic may process the one or several measurement time-series to generate the decision logic output.

The one or several measurement time series may be representative of electrical characteristics of the asset and/or of components of an electric power generation, transmission, and/or distribution system that comprises the asset or that is coupled to the asset.

The one or several measurement time series may comprise current and/or voltage measurements for one or several phases (e.g., for three phases) or features determined from current and/or voltage measurements for one or several phases. Alternatively or additionally, the one or several measurement time series representative of electrical characteristics may comprise current and/or voltage measurements for a DC grid or features determined from current and/or voltage measurements for a direct current (DC) grid or a hybrid alternating current (AC) - DC grid. Alternatively or additionally, the one or several measurement time series representative of electrical characteristics may comprise current and/or voltage measurements obtained on a distributed energy resource (DER). These one or several measurement time series may be received by an input layer of the trained decision logic.

The corrective, protective, and/or mitigating action may comprise controlling the asset or at least one component of an electric power generation, transmission, and/or distribution system that comprises the asset or that is coupled to the asset.

The corrective, protective, and/or mitigating action may comprise controlling an output interface. The output interface may be provided at a control center.

The corrective, protective, and/or mitigating action may comprise selectively causing a circuit breaker to trip.

The corrective, protective, and/or mitigating action may comprise controlling a converter and/or coupler (e.g., in a DC grid, such as a high voltage DC grid, or a hybrid AC-DC grid; and/or for a system comprising one or several DERs).

The one or several measurement time series may comprise measurements of transformer characteristics. The transformer characteristics may include any one or any combination of insulation oil temperature, insulation oil composition, dissolved gas concentration(s) of one or several gases, transformer breather characteristics, transformer breather desiccant characteristics, without being limited thereto. These one or several time series may be received by an input layer of the decision logic.

The corrective, protective, and/or mitigating action may comprise controlling the transformer or a circuit breaker connected to a transformer input and/or output. The corrective, protective, and/or mitigating action may comprise controlling a tap changer for the transformer.

The one or several measurement time series representative of electrical characteristics may comprise measurements of tap changer and/or tap changer switch characteristics. The tap changer and/or tap changer switch characteristics may include current and/or voltage measurements obtained at at least one terminal of the tap changer and/or tap changer switch, features derived therefrom (such as impedance or admittance), oil characteristics, etc. These one or several time series may be received by an input layer of the decision logic.

The corrective, protective, and/or mitigating action may comprise controlling the tap changer to change a tap changer position and/or controlling the tap changer switch.

The IED may have an output operative to output at least one control signal to effect the corrective, protective, and/or mitigating action.

The IED may be a relay.

The IED may be a distance protection or time domain protection relay.

The IED may have an output operative to cause at least one circuit breaker (CB) to trip.

An electric power system according to an aspect comprises an intelligent electronic device (IED) and a system according to an embodiment for generating a decision logic for the at least one IED.

The electric power system may comprise at least one asset.

An input of the IED may be coupled to one or several measurement devices that are operative to sense electrical characteristics associated with the IED.

An output of the IED may be coupled to the asset and/or other components of the electric power system, for causing a corrective, protective, and/or mitigating action to be performed responsive to an output of the decision logic.

The IED may be operative to perform at least one action (e.g., a corrective and/or protective action) responsive to a decision logic output.

The decision logic may receive one or several measurement time series from one or several measurement devices. The decision logic may process the one or several measurement time-series to generate the decision logic output.

The one or several measurement time series may be representative of electrical characteristics of the asset and/or of components of an electric power generation, transmission, and/or distribution system that comprises the asset or that is coupled to the asset.

The one or several measurement time series may comprise current and/or voltage measurements for one or several phases (e.g., for three phases) or features determined from current and/or voltage measurements for one or several phases. Alternatively or additionally, the one or several measurement time series representative of electrical characteristics may comprise current and/or voltage measurements for a DC grid or features determined from current and/or voltage measurements for a direct current (DC) grid or a hybrid alternating current (AC) - DC grid. Alternatively or additionally, the one or several measurement time series representative of electrical characteristics may comprise current and/or voltage measurements obtained on a distributed energy resource (DER). These one or several measurement time series may be received by an input layer of the trained decision logic.

The corrective, protective, and/or mitigating action may comprise controlling the asset or at least one component of an electric power generation, transmission, and/or distribution system that comprises the asset or that is coupled to the asset.

The corrective, protective, and/or mitigating action may comprise controlling an output interface. The output interface may be provided at a control center.

The corrective, protective, and/or mitigating action may comprise selectively causing a circuit breaker to trip.

The corrective, protective, and/or mitigating action may comprise controlling a converter and/or coupler (e.g., in a DC grid, such as a high voltage DC grid, or a hybrid AC-DC grid; and/or for a system comprising one or several DERs).

The one or several measurement time series may comprise measurements of transformer characteristics. The transformer characteristics may include any one or any combination of insulation oil temperature, insulation oil composition, dissolved gas concentration(s) of one or several gases, transformer breather characteristics, transformer breather desiccant characteristics, without being limited thereto. These one or several time series may be received by an input layer of the decision logic.

The corrective, protective, and/or mitigating action may comprise controlling the transformer or a circuit breaker connected to a transformer input and/or output. The corrective, protective, and/or mitigating action may comprise controlling a tap changer for the transformer.

The one or several measurement time series representative of electrical characteristics may comprise measurements of tap changer and/or tap changer switch characteristics. The tap changer and/or tap changer switch characteristics may include current and/or voltage measurements obtained at at least one terminal of the tap changer and/or tap changer switch, features derived therefrom (such as impedance or admittance), oil characteristics, etc. These one or several time series may be received by an input layer of the decision logic.

The corrective, protective, and/or mitigating action may comprise controlling the tap changer to change a tap changer position and/or controlling the tap changer switch.

The IED may have an output operative to output at least one control signal to effect the corrective, protective, and/or mitigating action.

The electric power system may comprise at least one circuit breaker (CB).

The IED may be operatively coupled to the at least one CB to cause a trip in case of a fault that occurs in a zone protected by the IED.

Various effects and advantages are attained by the methods, systems, and devices according to embodiments. A decision logic can be automatically generated and can be deployed for execution by an intelligent electronic device (IED) to automatically take decisions. The decision logic provides enhanced dependability and speed for critical decision making, without requiring human expert knowledge for distinguishing simpler and more challenging training cases during training. In field use, the decision logic receives time-series input and provides a time-series output, the time-series output being indicative of whether a corrective, protective, and/or mitigating action is to be taken. The techniques can be employed to generate a decision logic for a digital relay, e.g. for a digital substation relay for performing distance protection or time domain protection for power transmission system protection, without being limited thereto.

BRIEF DESCRIPTION OF THE DRAWINGS

The subject-matter of the application will be explained in more detail with reference to preferred exemplary embodiments which are illustrated in the attached drawings, in which:

Figure 1 is a schematic representation of a system comprising an asset protection, monitoring, or control device.
Figure 2 is a flow chart of a method.
Figures 3 and 4 show decision logic outputs.
Figures 5 and 6 show decision logic inputs.
Figure 7 is a schematic representation of a weighting function associated with a training case used in machine learning (ML) model training.
Figure 8 is a schematic representation of the weighting function of Figure 7 adjusted during ML model training.
Figure 9 is a schematic representation of a weighting function associated with a training case used in machine learning (ML) model training.
Figure 10 is a schematic representation of the weighting function of Figure 9 adjusted during ML model training.
Figure 11 is a schematic representation of the weighting function of Figure 9 adjusted during ML model training for a training case that is more challenging than the training case underlying Figure 10, after a same number of iterations of the training as in Figure 10.
Figure 12 is a schematic representation of a weighting function.
Figure 13 is a schematic representation of another weighting function associated with a training case for which a target output time-series does not change its value.
Figure 14 is a flow chart of a method.
Figure 15 is a schematic representation of a logic executed by an intelligent electronic device (IED) for asset protection, monitoring, or control.
Figure 16 is a schematic representation of an ML model.
Figure 17 is a schematic representation of a gated recurrent unit (GRU) of an ML model.
Figure 18 is a schematic representation of a system comprising a computing system and IED.

DETAILED DESCRIPTION OF EMBODIMENTS

Exemplary embodiments of the application will be described with reference to the drawings in which identical or similar reference signs designate identical or similar elements. While some embodiments will be described in the context of distance protection or time domain protection of a power distribution or transmission systems, the methods and devices described in detail below may be used in a wide variety of systems.

The features of embodiments may be combined with each other, unless specifically noted otherwise.

While some embodiments are described in association with a decision logic executed by a digital protection relay for power system protection (e.g., for taking a trip or restrain decision, as a function of time, for a circuit breaker (CB) in response to detection of a fault in a zone protected by the digital protection relay), the embodiments are not limited thereto.

Embodiments of the application can be generally employed for critical decision-making systems, for which there is a particular need for dependability and speed of the decision-making.

Weighting functions used in a machine learning (ML) model training are automatically adjusted during the training. The weighting functions are used to weight loss functions associated with training cases, with the weighting being dependent on the sample time in the respective training case. The loss function may quantify, in dependence on sample time, how strongly a deviation of the time-dependent output of the ML model from a target output series of the respective training case is to be weighted. The weighting function may be used to weight a modulus of a difference between the time-dependent output of the ML model from a target output series of the respective training case and/or an entropy.

The training may be performed by adjusting parameters and/or hyperparameters of the ML model in a manner which reduces, e.g., minimizes, an aggregated loss function. The aggregated loss function may be dependent on the loss functions of the training cases, each weighted by the weighting function.

The weighting function may be a training kernel employed in a training kernel ML training procedure.

The aggregated loss function may be a function that may also be referred to as "cost function" in the art. It should be understood that the term "cost function" does not refer to financial or business costs but quantifies the suitability of the ML model to generate a desired target output time-series responsive to an input time-series of a training case, respectively aggregated (e.g., summed) over several training cases.

The target output time-series of at least some training cases may "toggle." As used herein, the term "toggling" of a signal refers to a change (e.g., from one sample time to a successive sample time) between different output values. The change by "toggling" may be a discontinuous, abrupt change between different output values of a set of two, three or more discrete values or value ranges.

The systems, methods, and devices address the challenges related to training of an ML model for critical decision making where decision quality is of the highest importance, but decision speed is also an important factor. Recurrent neural networks (RNNs) may be trained to classify samples in a data series, for example, periodically recorded samples in a time-series may be labelled as either acceptable or faulty. However, this often creates a class-imbalanced dataset, with the number of samples in the training set associated with each class being unequal. Typically, when classifying samples as either acceptable or faulty, the number of training samples labelled as acceptable vastly outnumber the samples labelled as faulty.

While RNNs represent ML models which may be used for time-series classification, for challenging cases the classification might fail, and false positive or false negative predictions might be present. This may be due either to low signal to noise ratios in the inputs and/or the output class being dependent on relatively small changes in the inputs.

A weighting function, e.g. a training kernel, for an ML model (e.g., an artificial neural network (ANN) training) is employed, which is an additional weight applied to a loss function per training case per sample. The weighting function (e.g. training kernel) defines which samples influence the loss function, and therefore will have the biggest influence on the updates to the ML model parameters.

Methods, systems, and devices according to embodiments automatically adjust (e.g., optimize) the weighting functions for various training cases during training so that the resulting trained ML model can provide a correct decision as quickly as possible, depending on the complexity of the specific case.

The decision logic may be a decision logic for use by a relay to provide power system protection with improved performance.

The techniques may be used more generally for asset monitoring and control (e.g., for industrial process control). For illustration, there are numerous applications where it is necessary to include monitoring and/or protection systems (henceforth referred to as protection systems) in order to prevent major failures. Examples of relevant applications include, amongst others, power system protection, where protection devices are used to disconnect faulty parts of an electrical network, or where process monitoring systems are used for identifying anomalous behaviors in an industrial plant which might be indicative of a developing failure.

The ML model may include or may be an RNN. RNNs such as long-short term memory (LSTM) or gated recurrent unit (GRU) allow ML models to be trained with an architecture which solves the problem of exploding and vanishing gradients during training on time series data. Such models can be trained to detect a specific event or situation in a classification training setup, with a training case comprised of an input time series and desired output class at each time step. The training cases retain causality (i.e., fault detection occurs on the basis of certain preceding events / variations). In such temporal setups there are several challenges which need to be properly addressed in order to not overfit the ML model, and ensure correct and robust ML model-based fault detection or alarm raise:

- Samples need be correctly labelled according to their appropriate class. In case of synthetic, simulation-based data it is known where a change of the state or structure in the modeled system occurs. However, it is usually the case that the change is not reflected immediately in measured physical quantities, such as current, voltage, speed, temperature etc. Especially during the training of RNNs, in such situations the model will learn that an output class changes at a specific moment in the time series, rather than changing on the basis of the information in the provided in the input time series signals. Therefore, it may be desired to delay a class change in order to avoid the situation where an output class changes before any new information can be gathered from the input signal.

- Whilst in some training datasets an event occurrence might be clearly evident in the input signals, for some fault cases the response in the input signals are hard to identify. Such cases will fail to correctly classify the samples, without additional delay during the model training procedure. One can use expert knowledge in order to distinguish "hard" and "easy" cases, then set a delay for each case separately. Such expert knowledge may not be readily available and/or may be prone to human error.

- The training procedure may be unbalanced by nature, as for correct restraining operation one requires the model output to be below a predefined threshold for all samples along the time dimension, while to decide whether an alarm needs to be raised or a fault indicated it is sufficient that only a single sample crosses a predefined threshold.

At least some of these challenges can be addressed during ML model training in order to ensure that a model delivers optimum decision quality as quickly as possible.

By providing an automatic adjustment of a weighting function (e.g., training kernel) during ML model training, using objective criteria, it is not required to use human expert knowledge to distinguish hard and easy training cases.

Methods and systems address the trade-off between decision quality and speed through altering a kernel during an ML model training. The typical training procedure is to prepare a set of candidate models with different architectures and parameters, such as number of layers, nodes in each layer, gated units in each layer, learning rate, kernel, batch size etc. Then each model is trained using training cases.

A training dataset may comprise a plurality of training cases and optional test cases. Each training case and, if present, test case may have a number N of samples of an input time series, and a number N of samples of a target output time series. The training case and, if present, test case may have information indicating which one of several decisions is expected.

The input time series may comprise multi-dimensional samples. For illustration, the input time series may comprise samples, each of which representing one or several electrical characteristics at the respective sample time. The one or several electrical characteristics may be real- or complex-valued. The input time series may comprise one or several features derived from one or several electrical characteristics. For a distance protection or time domain protection logic, the input time series may comprise three phase current measurements and three voltage measurements.

For time series data with inputs and outputs which are at least 3 dimensional tensors, an example of the specific dimension configuration may be represented as follows: (training case, timeline, signal channels). For a power system protection example, the channels may be three phase currents and voltages measurements.

The ML model may be trained to operate as a classifier that provides a time-dependent classification (i.e., which embeds a time dimension). The trained ML model is required to provide a classification with respect to time, where an alarm can be raised or where no alarm can be raised, depending on the input time series.

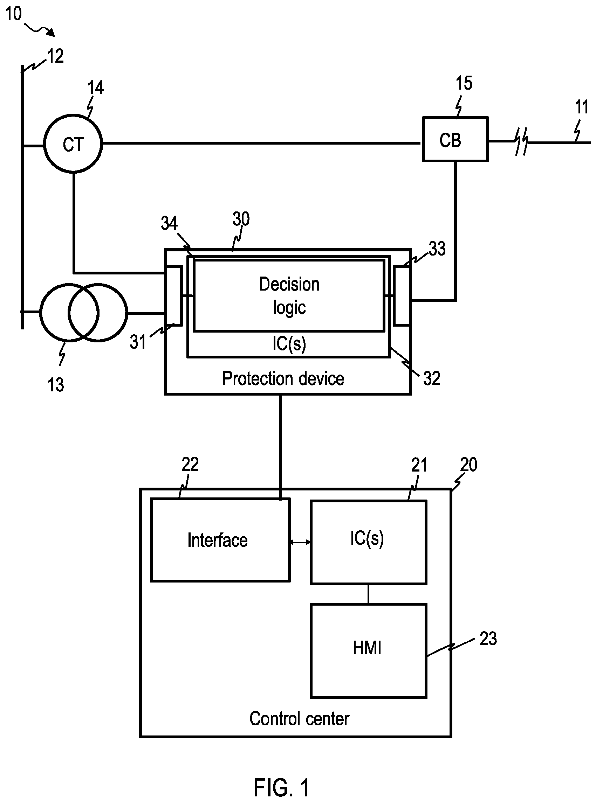

Figure 1 shows an electric power system comprising an asset protection, monitoring, or control device 30. The device 30 may be an intelligent electronic device (IED). The device 30 may be operative to execute a decision logic generated using the methods and/or systems disclosed herein. The asset protection, monitoring, or control device may be a protection device 30. The protection device 30 may be a protection relay.

The protection device 30 may be arranged at an end of a power transmission line 11 or a power distribution line. The protection device 30 is operative to cause a circuit breaker (CB) 15 to trip responsive to detection of a fault and, optionally, responsive to detecting that the fault is in a zone for which the protection device 30 is responsible.

The protection device 30 has an input interface 31 to receive measurements. The measurements may include voltage measurements at a local bus 12 provided by a voltage transformer (VT) 13 and current measurements provided by a current transformer (CT) 14. The inputs received at the input interface 31 may be provided to a decision-making logic, it being understood that some pre-processing (such as filtering, Fourier transform, principal components analysis, other statistics techniques) may be performed to the inputs as they pass from the interface 31 to the decision-making logic.

The protection device 30 may be operative to process the current and voltage measurements to determine whether there is a fault which requires a mitigating or protective action, such as trip of the CB 15. The protection device 30 may have one or several integrated circuit(s) (IC(s)) 32 to perform the processing. The one or several IC(s) 32 may comprise one or several processors, controllers, application specific integrated circuit(s) (ASIC(s)), field programmable gate arrays (FPGAs), or combination(s) thereof.

The protection device 30 has an output interface 33 to output a control signal to effect an action, such as a protective or mitigating action. The protection device 30 may be communicatively coupled to other devices in the system 10. For illustration, the protection device 30 may be communicatively coupled to a control center 20. The protection device 30 may output information on the detection of the fault to the control center 20 for outputting via a human-machine interface (HMI) 23. The control center 20 may have IC(s) 21 to process messages received from the protection device 30 at an interface 22 and for controlling the HMI 23 responsive thereto.

The device 30 executes a decision-making logic 34. The decision logic 34 may receive voltage and/or current measurements or other inputs and may process the inputs to generate a decision logic output. The decision logic output may be a time series. The input and/or output time series may have samples that may correspond to discrete, constant time intervals. The input and/or output time series may be a time series of scalars or may be a time series of vectors.

When the decision logic output is a time series of scalars, the time series may be binary. The time series may change its value between a first value and a second value. The first value may be a first indicator value indicating that the decision logic 34 considers a fault to be present and the second value may be a second indicator value indicating that the decision logic 34 considers the fault to be absent. The time series may be real- or complex valued, without being necessarily limited to just the first and second values.

When the decision logic output is a time series of vectors, the time series of vectors may have one or several vector elements that are binary and that may change its value between a first value and a second value. The first value may be a first indicator value indicating that the decision logic 34 considers a fault to be present and the second value may be a second indicator value indicating that the decision logic 34 considers the fault to be absent. The time series of vectors may comprise real- or complex valued vector elements.

The decision logic 34 may be a distance protection or time domain protection, which outputs a time series of values that indicate whether a certain fault is deemed to be present or absent at the respective sample time. The fault may be a ground fault, a phase-to-phase fault, a phase-to-phase-to-ground fault, or a three-phase fault in a zone for which the protection device 30 is responsible. The decision logic 34 may be operative to distinguish between these faults or between any sub-set of two or more of these faults.

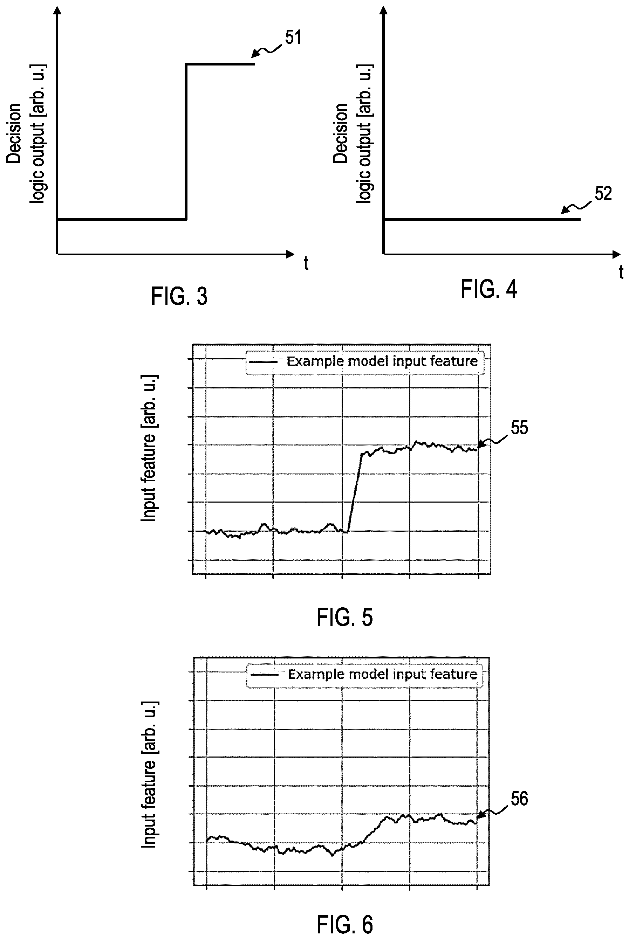

Figure 3 shows an example of a binary decision logic output 51 with alarm raise (e.g., where a CB trip is triggered by the rising flank of the decision logic output 51). Figure 4 shows a binary decision logic output 51 without an alarm being raised (e.g., where a restrain decision is taken).

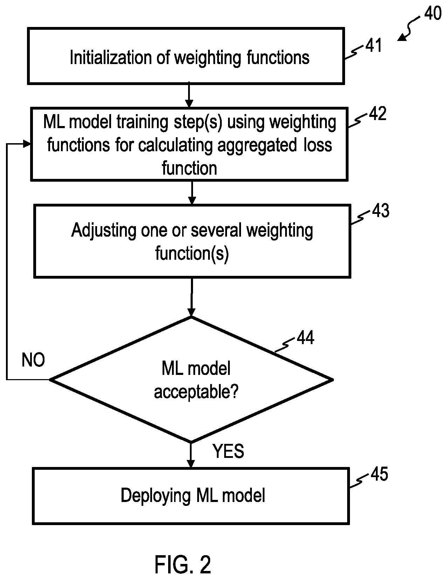

The decision logic 34 may be generated by a computing system by performing a training of at least one machine learning (ML) model, as will be explained with reference to Figures 2 to 17.

Figure 2 is a flow chart of a method 40. The method 40 may be performed automatically by at least one integrated circuit of a computing system to generate the decision logic 34. The method comprises training an ML model using a plurality of training cases. As explained above, each training case may comprise an input time series (which may include a number N of samples of an input scalar or tensor) and a target output time series (which may include a number N of samples of an output scalar or tensor). The target output time series may indicate the desired behavior for which the ML model is trained, in response to receiving the input time series. Each training case may include additional data, such as an indicator specifying whether the training case reflects a training case where no alarm is raised (e.g., restrain decision for distance protection or time domain protection) or a training case where an alarm is raised (e.g., trip decision for distance protection or time domain protection).

At step 41, weighting functions are initialized. Each weighting function may be a function of sample time. Each weighting function may have N weighting function values corresponding to N consecutive sample times. Each weighting function may respectively be associated with one of the training cases.

Step 41 may comprise, for any first training case for which the target output time series changes between different values, initializing the weighting function associated with the training case such that it is non-constant. The weighting functions for the first training cases for which the output time series changes its value (i.e., an alarm is raised or a fault condition is detected) may be initialized to the same function at step 41. As will be explained below, weighting functions associated with different training cases may be adjusted independently of each other during the method 40 in an automatic manner. The training functions associated with each first training case for which the target output time series changes its value may be initialized such that, for samples in a first time period after the target output time series changes its value, the weighting function has a first value (which may be zero). The training functions associated with each first training case for which the target output time series changes its value may be initialized such that, for samples in a second time period that starts at a delay after the target output time series changes its value, the weighting function has a second value greater than the first value. Thereby, samples in the second time period are weighted more strongly than samples in the first time period when adjusting parameters and/or hyperparameters of an ML model. As will be explained in more detail below, the delay may be decreased during the method 40. The delay may respectively be decreased, individually for each training case, in a monotonic (but not necessarily strictly monotonic) manner.

Step 41 may comprise, for any second training case for which the target output time series does not change its value between different values, initializing the weighting function associated with the training case such that it is constant.

For balancing reasons, the weighting functions may be initialized in such a manner that an area under the weighting functions associated with training cases in which the target output time series is non-constant (i.e., in which the ML model is expected to raise an alarm or take another protective or corrective action) is equal to an area under the weighting functions associated with training cases in which the target output time series is constant (i.e., in which the ML model is expected not to raise an alarm or does not take any other protective or corrective action). The areas may be computed by summation or integration, depending on whether the weighting functions are defined as continuous or time-discrete functions.

At step 42, a training step for at least one ML model is performed. The training step may comprise adjusting one or several parameters and/or hyperparameters of an ML model. The parameters and/or hyperparameters may be adjusted in such a manner that a value of an aggregated loss function (e.g., a cost function of a training kernel ML training technique) is reduced. Finding adjusted parameter values and/or hyperparameter values may be performed using various techniques. Adjusting the parameters may comprise updating the parameters using gradient descent, stochastic gradient descent (SGD), a nonlinear conjugate gradient technique, a limited-memory Broyden-Fletcher-Goldfarb-Shanno algorithm (L-BFGS), a Levenberg-Marquardt Algorithm (LMA), a population-based training algorithm such as an evolutionary algorithm (EA) or a particle swarm optimization (PSO), without being limited thereto. These techniques or trial-and-error may be used for adjusting hyperparameters (such as a number of hidden layers and/or a number of nodes of an RNN).

The training at step 42 is dependent on the weighting functions. In particular, the aggregated loss function (e.g., a cost function of a training kernel ML training technique) is dependent on the weighting functions for training cases that are used, with the weighting functions respectively quantifying how strongly a deviation of the ML model output (obtained responsive to the input time series of the training case) relative to the target output time series of the training case is penalized. Thus, the ML model parameter as adjusted in the training step 42 are generally dependent on the weighting functions. As training continues, one, some, or all of the weighting functions may be adjusted. This adjustment is made automatically and individually for each training case and facilitates obtaining a decision logic with fast decision speed without requiring a human expert input that distinguishes easy and hard training cases.

At step 43, one or several of the weighting functions may be adjusted. Only weighting functions associated with training cases in which the target output time series changes its value may be adjusted. The adjustment of such weighting functions may comprise selectively and automatically decreasing a delay between an onset (sample) time at which the weighting function exhibits a rising flank and a sample time at which the target output time series changes its value.

A decision on whether and, optionally, by how strongly each weighting function is adjusted is made individually for each training case. An objective criterion, such as a threshold comparison or other performance evaluation, may be used to determine, individually for each training case in which the target output time series varies as a function of sample time, whether, and optionally by how many samples, the training function is to be adjusted.

The criterion for adjusting the weighting function may be based on a performance evaluation. For illustration, step 43 may comprise determining whether the ML model trained at step 42 correctly classifies the training case (e.g., by identifying it as a case for which a trip or restrain decision is taken, or a case for which an alarm is raised or no alarm is raised). A counter value that counts consecutive correct classifications for the training case may be incremented in case of a correct classification. The counter may be reset in case of an incorrect classification. The counter value may be compared to a threshold. If the counter reaches the threshold or if the counter exceeds the threshold, the weighting function may be adjusted and the counter may be reset. If the counter value does not reach the threshold, the weighting function may not be adjusted during this iteration. These acts may be performed respectively for each training case in which the target output time series varies.

At step 44, it is determined whether the ML model is acceptable. The determination at step 44 may comprise testing ML model performance against test cases not used in step 42. If the ML model is not acceptable (according to some performance metric), the method returns to step 42. Otherwise, the method may proceed to step 45.

At step 45, the trained ML model may be deployed. Deploying the ML model may comprise storing the ML model for execution by an IED. Deploying the ML model may comprise providing the ML model to the IED.

The method may further comprise executing, by the IED, the decision logic in field use. In field use, the decision logic may receive time-series input representative of current and/or voltage and/or other measurements and may generate time-series output that determines whether a protective, corrective, or mitigating action is to be taken.

The time-series input may be received from one or several measurement devices, such as current and/or voltage transformers and/or other sensors.

The time-series input may be received from one or several measurement devices that sense electrical characteristics of an asset and/or lines or other components of an electric power system coupled to the asset.

The IED may cause the protective, corrective, or mitigating action to be performed. The IED may issue command(s) to cause the protective, corrective, or mitigating action to be executed. For illustration, the IED may issue a command to cause a circuit breaker to trip and/or to control an interface in a control center.

The weighting function may be an additional weight applied to a loss function per training case per each sample, which quantifies how strongly samples influence the loss function and therefore will have the biggest influence on the updates to the model weights. Various ways of calculating a loss function can be used. The weighted loss function for a training case may be computed by weighting a metric of a difference, e.g., as

$$L_{j,\,k} = \sum_{i=1\ldots N} w_j(i;\,k) \times ||\, t_j(i) - o_k(\,inp_j\,;\,i)\,|| \qquad\qquad (1)$$

where:

j is a label for a training case (with j being an integer from 1 to J and J designates a number of training cases);

i designates a sample time (with i being an integer from 1 to N and N designates a number of samples);

$L_{j,k}$ is the weighted loss function for a training case j at an iteration k of ML model training;

$w_j(i; k)$ is the weighting function for training case j at an iteration k of ML model training at sample time i;

$t_j(i)$ is the target output time series of training case j at sample time i;

$o_k(inp_j; i)$ is the output of the ML model training at iteration k of the ML model training at sample time i, responsive to the input time series samples of training case j for the sample times 1... i; and

$\| \cdot \|$ designates a norm calculated according to a metric (such as a modulus, an L1 norm, an L2 norm etc.).

Other ways of quantifying and weighting the discrepancy between the ML model output and the target output time series may be used. For example, the weighted loss function for a training case may be computed by weighting an entropy expression, e.g., as

$$L_{j,k} = \Sigma_{i=1 \ldots N} \, w_j(i; k) \times \| t_j(i) - o_k(inp_j; i) \| \times \ln(\| t_j(i) - o_k(inp_j; i) \|). \qquad (2)$$

where ln denotes a natural logarithmic function. Logarithmic functions with other bases may be used.

The weighted loss function is dependent on the weighting function and, by virtue of its dependency on the ML model output, on the parameters of the ML model in the respective iteration.

The aggregated loss function (e.g., a cost function of a training kernel ML training) may be determined as

$$C_k = \Sigma_{j=1 \ldots J} L_{j,k} \qquad (3)$$

Adjusting the parameters and/or hyperparameters of the ML model at step 42 may be performed so as to reduce the aggregated loss function $C_k$.

Adjusting the weighting function for a training case j at step 43 may comprise shifting at least part of the weighting function along the sample time axis. For illustration, a weighting function as updated for the subsequent iteration k+1 may be determined as

$$w_j(i; k + 1) = w_j(i + s; k) \text{ for } i \leq N - s \qquad (4)$$

$$w_j(i; k + 1) = b \text{ for } N - s < i \leq N \qquad (5)$$

with b being a constant. This essentially shifts (part of) the weighting function to earlier sample times by s samples. The integer s may be the same for all training cases j or may vary from one training case to another, e.g., based on ML model performance. Different weighting functions $w_j$ for different training cases j may be adjusted independently of each other. Some of the weighting functions (e.g., constant weighting functions) may not need to be adjusted at all during the method 40.

Since the information about the occurrence of an event in the input signals is delayed, a portion of the weighting function that has larger values (thereby giving more weight to the loss function at the respective function) may be delayed by a number of samples. The weighting function associated with a training case having a non-constant target output time series may include a Gauss curve profile for at least some of the samples. ML model performance may be enhanced by a training in which the weighting function weights the loss function. Samples are weighted so as to achieve a good trade-off between decision quality and the speed.

Use of the weighting functions and automatic adjustment of the weighting functions in the course of the iterative ML model training allows the training to focus on utilizing the information in the input for correct classification just after the occurrence of an event. The weighting functions facilitate balancing the classes (e.g., a first class of training cases in which the target output time series is non-constant and a second class of training cases in which the target output time series is constant). The total area of the weighting function under the event alarm raised may be set to be equal to that under the event no alarm raised, for balancing along the time direction.

By adjusting the weighting function, independently for different training cases, the weighting functions (e.g., training kernels) may be automatically fine-tuned in order to correctly train the ML model. The automatic adjustment of the weighting function reflects that, for easier cases in which the input time series exhibits a pronounced change in characteristics (as illustrated in Figure 5), greater weight can be given to samples closer to the time at which the target output time series changes its value earlier on in the iterative training process than for more challenging cases (as illustrated in Figure 6).

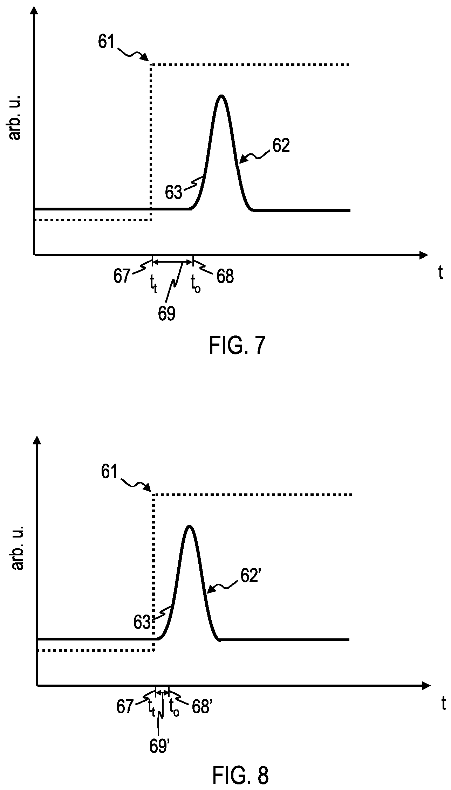

An adjustment of a weighting function is explained with reference to Figures 7 to 11.

Figures 7 and 8 show a weighting function 62 prior to adjustment and the weighting function 62' after adjustment, respectively as a function of sample time. The weighting function 62 has a rising flank 63. As illustrated, the weighting function may include a Gauss curve profile. The rising flank 63 starts at an onset time $t_o$ 68. The rising flank 63 is delayed by a delay 69 relative to a time $t_t$ 67 at which the target output time series 61 of the respective training case changes its value. The delay 69 may initially set to be large. Such a setting facilitates initial stages of ML model training to attain a robust ML model, because samples with a significant delay after the time $t_t$ 67 are given greater weight. It is not necessary to attain fast decision speed at the early iterative stages of the ML model training. As ML model training proceeds, the weighting function is modified to adjusted weighting function 62'. The adjusted weighting function 62' has a rising flank 63 which is delayed by an adjusted delay 69' relative to a time $t_t$ 67 at which the target output time series 61 of the respective training case changes its value. This adjustment of the weighting function may be made only once the ML model has proven to be robust for the respective training case (e.g., by correctly classifying the training case in a number of consecutive ML model training iterations, which reaches or exceeds a threshold). By reducing the delay of the rising flank 63 from an initial, larger delay 69 to an adjusted, smaller delay 69', samples closer to the time $t_t$ 67 are given greater weight. This ensures that the ML model, which has already proven to be robust for the training case when using the previous weighting function 62, is more likely to take the correct decision more rapidly.

The weighting function used for training cases in which the target output time series changes its value may have other functional dependency on sample time but generally exhibits increased values (reflected by a rising flank) at times after the time $t_t$ at which the target output time series changes its value.

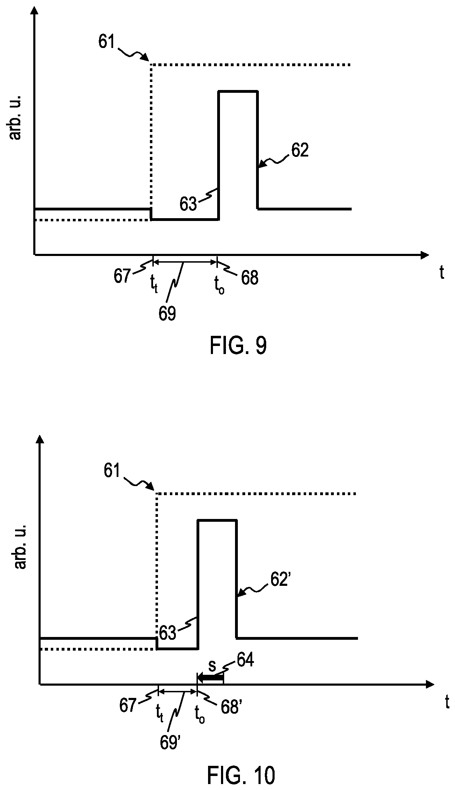

Figures 9 and 10 show a weighting function 62 prior to adjustment and the weighting function 62' after adjustment, respectively as a function of sample time. The weighting function 62 has a rising flank 63 which may be a step-like change. As illustrated, the weighting function may include a rectangular curve profile. The rising flank 63 starts at an onset time $t_o$ 68. The rising flank 63 is delayed by a delay 69 relative to a time $t_t$ 67 at which the target output time series 61 of the respective training case changes its value. The delay 69 may initially set to be large. Such a setting facilitates initial stages of ML model training to attain a robust ML model, because samples with a significant delay after the time $t_t$ 67 are given greater weight. It is not necessary to attain fast decision speed at the early iterative stages of the ML model training. As ML model training proceeds, the weighting function is modified to adjusted weighting function 62'. The adjusted weighting function 62' has a rising flank 63 which is delayed by an adjusted delay 69' relative to a time $t_t$ 67 at which the target output time series 61 of the respective training case changes its value. This adjustment of the weighting function may be made only once the ML model has proven to be robust for the respective training case (e.g., by correctly classifying the training case in a number of consecutive ML model training iterations, which reaches or exceeds a threshold). By reducing the delay of the rising flank 63 from an initial, larger delay 69 to an adjusted, smaller delay 69', samples closer to the time $t_t$ 67 are given greater weight. This ensures that the ML model, which has already proven to be robust for the training case when using the previous weighting function 62, is more likely to take the correct decision more rapidly.

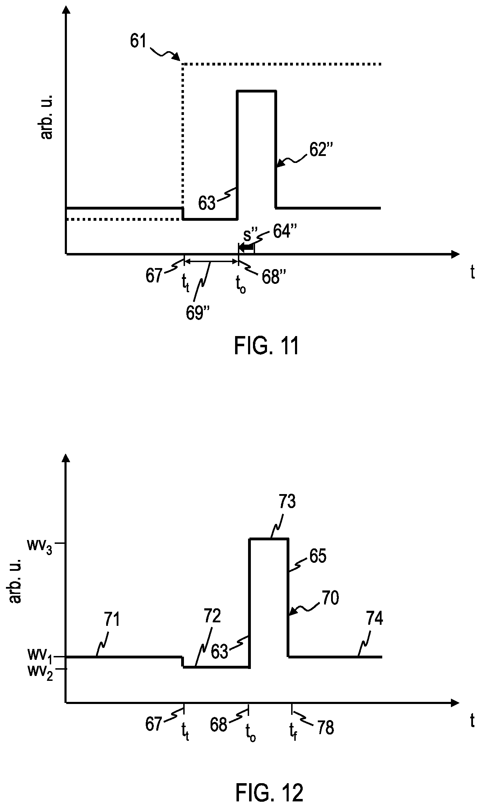

The weighting function can (and generally will) be different for different training cases in which the target output time series changes its value, as the iterative ML model training with automatic weighting function adjustment proceeds. For illustration, in an iteration k of the iterative ML model training with automatic weighting function adjustment, the rising flank 63 of the weighting function 62 for one training case may have shifted forward by a shift s 64, closer to (but still after) the time $t_t$ 67. As shown in Figure 11, the rising flank 63 of the weighting function 62 for another training case may have shifted forward by a shift s" 64", which is different from the shift s 64 shown in Figure 10. By adjusting weighting functions individually and by making the adjustment conditionally dependent on a performance of the ML model (e.g., a performance for the respective training case), the decision logic is trained to robustly take correct decisions for more challenging training cases while accepting that the training process has to continue for more iterations to also ensure that the correct decisions for the more challenging training cases are taken more rapidly.

The weighting functions used for training cases in which the target output time series changes its value may comprise a section that weights samples more strongly. Various weighting functions may be used. For illustration, weighting functions for training cases in which the target output time series changes its value may have values that are less than or equal to a first weighting function threshold value $wt_1$ for times subsequent to the time $t_t$ and values that are greater than the first weighting function threshold value $wt_1$ for at least some sample times subsequent to the time $t_t$ plus a delay d (which is varied in the course of the iterative ML model training). E.g., for any training case j for which the target output time series toggles at a time $t_t$,

$$w_j(i; k) \leq wt_1 \text{ for } t_t \leq i < t_t + d, \qquad\qquad (6)$$

$$w_j(i; k) > wt_1 \text{ for } t_t + d \leq i < t_f, \qquad\qquad (7)$$

where $t_f$ is a positive integer greater than $t_t + d = t_o$. The first weighting function threshold value $wt_1$ may be equal to zero. In some cases, the weighting function value may remain greater than the first weighting function threshold value $wt_1$ for sample times i up to N, i.e.,

$$w_j(i; k) > wt_1 \text{ for } t_t + d \leq i \leq N \tag{8}.$$

As the iterative ML model proceeds, d may be decreased depending on ML model performance for the respective training case. I.e., d is a monotonically (but not necessarily strictly monotonically) decreasing function of the number k of iterations of the iterative training.

The weighting functions 70 associated with training cases in which the target output time series changes its value may be section-wise constant, as illustrated in Figure 12. For illustration, a weighting function 70 associated with a training case for which the target output time series changes its value may have a first weighting function value $wv_1$ for sample times less than the time $t_t$ 67 and/or for sample times greater than or equal to the final time $t_f$ 78 of the weight increase in the weighting function. A weighting function 70 associated with a training case for which the target output time series changes its value may have a second weighting function value $wv_2$ for sample times greater than or equal to the time $t_t$ 67 and less than the sum of time at which the target output time-series changes its value and delay, $t_t + d$. The second weighting function value $wv_2$ may be less than the first weighting function value $wv_1$. A weighting function 70 associated with a training case for which the target output time series changes its value may have a third weighting function value $wv_3$ for sample times greater than or equal to the sum of time at which the target output time-series changes its value and delay, $t_t + d$, and less than the final time $t_f$ 78 of the weight increase. The third weighting function value $wv_3$ may be greater than the first and second weighting function values $wv_1$, $wv_2$. I.e., for any training case j for which the target output time series changes its value at a time $t_t$, the weighting function may, without limitation, be defined as

$$w_j(i; k) = wv_1 \text{ for } i \leq t_t \text{ and } t_f \leq i \leq N \tag{9}$$

$$w_j(i; k) = wv_2 \text{ for } t_t \leq i < t_t + d, \tag{10}$$

$$w_j(i; k) = wv_3 \text{ for } t_t + d \leq i < t_f, \tag{11}$$

where $wv_2 < wv_1 < wv_3$. The second weighting function value $wv_2$ may be zero. Other functional dependencies may be used. As the iterative ML model proceeds, d may be decreased depending on ML model performance for the respective training case. I.e., d is a monotonically (but not necessarily strictly monotonically) decreasing function of the number k of iterations of the iterative training.

As illustrated in Figures 9 to 12, a weighting function having a rectangular window section can be used. Moreover, by setting the weighting function value to zero for an additional zone 72 after an event occurrence allows to further improve the correct classification of an event. Setting the weighting function value to zero renders no contribution to the training procedure for the period just after an event occurrence. An example of a rectangular kernel setup is presented in Figures 9 to 12.

The adjustment to the weighting function that is automatically performed in the iterative ML model training with weighting function adjustment can be considered as shrinking the zone 72 for each case depending on the model performance for that case. Synthetic example of a setup for two cases at the beginning and end of a training are exemplarily illustrated in Figures 9-11.

The aforementioned cases start with an initial position $t_o$ set to 40 samples. The inputs in a first training case may contain sufficient information to obtain desired alarm raise. Consequently, during training the model predicts correct classification. This causes a shift s 64 in the rising flank 63 resulting in the shrinkage of the zone 72 for this specific case and pushes model output to being both correct and fast. A second case that is a more challenging case for the ML model to be learned results in a more gradual and less pronounced shift s" 64" of the rising flank 63. While a correct classification is still obtained by the ML model for this more challenging case, the ML model requires a greater amount of time for the alarm to be raised for this challenging case.

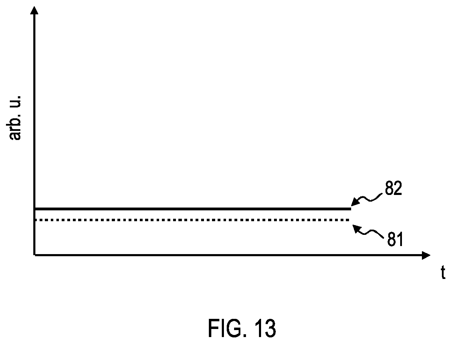

As shown in Figure 13, the weighting functions 82 may be set to be constant for training cases for which the target output time series 81 is constant. The area under the weighting function 82 and the weighting functions 70 may be made equal to each other (e.g., by appropriately choosing the values $wv_1$ and/or $wv_3$).

Thus, for cases in which no alarm is raised, all samples are required to correctly classify no event, even if transients are present in the input signal. This is important for, e.g., power system protection cases which require a robustly trained model, which raises an alarm only if it is assured that an event has happened.

As illustrated in Figures 7 to 13, the weighting functions associated with at least some of the training cases are automatically altered during an ML model training procedure. An initial position of a portion of the weighting function that weights samples more strongly can initially be set to be high (thus indicating high delay). This allows the ML model to correctly indicate the event detection by crossing a predefined threshold at the model output for most or all training cases. If the classification holds for a predefined number of consecutive samples, the weighting function may be adjusted to give greater weight to samples closer to the event occurrence, which will force the trained ML model to react more quickly.

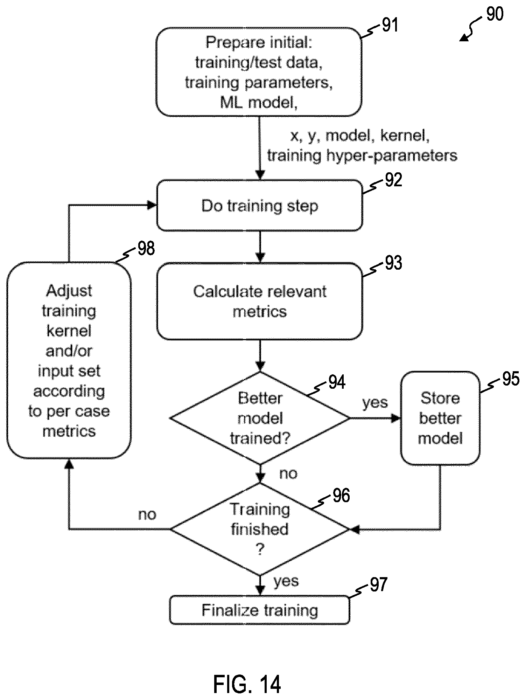

Figure 14 is a flow chart of a method 90. The method 90 may be performed automatically by a computing system to generate a decision logic.

At step 91, an initialization is performed. This may comprise retrieving training cases, optionally retrieving test cases, initializing ML model parameters and/or hyperparameters, and initializing weighting functions (e.g., training kernels).

At step 92, a training step is performed. The training step may comprise adjusting parameters and/or hyperparameters of an ML model in a manner which reduces a value of an aggregated loss function (e.g., of a cost function of a training kernel ML model training).

At step 93, a performance metric may be calculated. Calculating the performance metric may comprise calculating weighted loss functions, attained by the ML model after the training step, for the training cases. Calculating the performance metric may comprise calculating a loss function for test cases not included in the training set.

At step 94, it is determined, based on the performance metric, whether the ML model with its parameters set at step 92 outperforms the best-performing ML model previously identified. If the ML model outperforms the best-performing ML model previously identified, the ML model parameters and/or hyperparameters may be stored at 95 and the method proceeds to step 96. If the ML model does not outperform the best-performing ML model previously identified, the method proceeds to step 96.

At step 96, it is determined whether a termination criterion for the training is fulfilled. This may comprise determining whether a number of iterations of the training has reached an iteration threshold and/or whether performance continues to improve and/or whether the performance meets a performance criterion. If the termination criterion is fulfilled, the training may be finalized at step 97. This may comprise storing the ML model as trained in the iterative procedure.

At step 98, if the termination criterion is not fulfilled, the weighting functions associated with one or several training cases may be adjusted. Adjustment of the weighting function(s) may be done independently for the weighting functions associated with different training cases. Adjustment of the weighting function(s) may comprise gradually weighting samples closer to the event occurrence more strongly. This may comprise shifting (part of) a weighting function along the sample time axis. The method may then return to step 92.

The trained ML model may be combined with additional processing modules to implement the decision logic 34. The additional processing modules may be operative to process measurements into features that are input into the ML model and/or to process the ML model output.

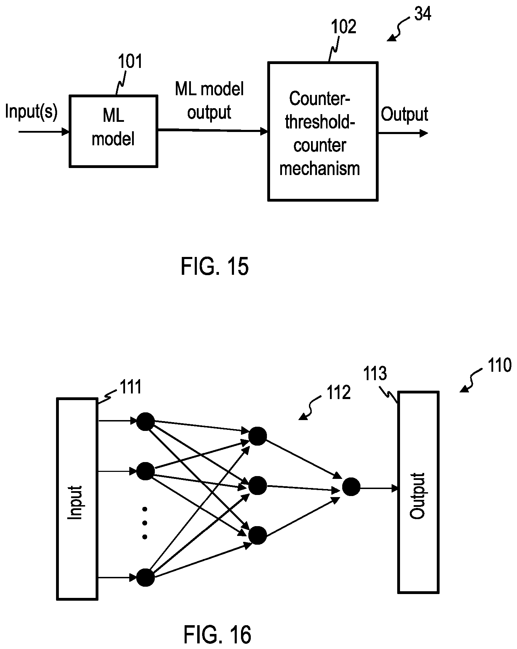

Figure 15 shows a schematic diagram of a decision logic 34 that comprises an ML model 101 trained using the iterative ML model training with automatic weighting function adjustment disclosed herein. The decision logic 34 may comprise a counter-threshold-counter mechanism 102 that processes the ML model output. The counter-threshold-counter mechanism 102 may use a counter to count a number of consecutive samples during which the indicator level has exceeded its threshold. A threshold comparison may be performed to compare an output of the ML model 101 to a threshold. If the output is equal to or exceeds the threshold, a counter is incremented. If the output is less than the threshold, the counter is reset. An action may be triggered when the counter reaches a further threshold.

The ML model(s) that are trained may have various configurations and characteristics. The ML model(s) may comprise RNNs, without being limited thereto.

The decision logic 34 may have an input layer to receive time-series input from one or several measurement devices, such as current and/or voltage transformers and/or other sensors.

The time-series input may be received from one or several measurement devices that sense electrical characteristics of an asset and/or lines or other components of an electric power system coupled to the asset.

Based on an output of the counter-threshold-counter mechanism 102, the IED that comprises the decision logic 34 may cause the protective, corrective, or mitigating action to be performed. The IED may issue command(s) to cause the protective, corrective, or mitigating action to be executed. For illustration, the IED may issue a command to cause a circuit breaker to trip and/or to control an interface in a control center. The decision logic 34 may have an output layer that provides a (time-series) output that selectively causes the protective, corrective, or mitigating action to be executed.

Figure 16 schematically illustrates an ML model 110 that may be trained to generate the decision logic. The ML model 110 has an input layer 111. The input layer 111 may be operative to receive measurements indicative of electrical characteristics (e.g., several current and/or voltage measurements) or features derived from such measurements of electrical characteristics.

The ML model 110 has an output layer 113. The output layer 113 may output a time-dependent signal or tensor that may indicate whether the ML model 110 considers an event (e.g., a fault in zone protected by the ML model 110) to be present.

The ML model 111 may have one or several RNN layers 112. The one or several RNN layers 112 may comprise LSTM or GRU cells. Training the ML model may comprise adjusting parameters (such as biases and/or Kernel weights and/or recurrent weights) of an RNN.

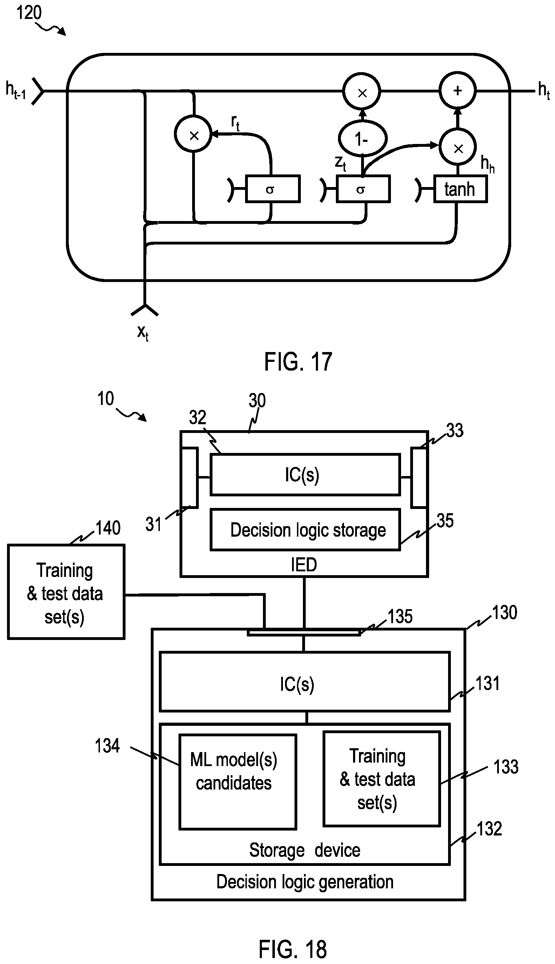

For illustration rather than limitation, the ML model may include a GRU cell as illustrated in Figure 17. The GRU cell may be defined by the following set of equations:

$$z_t = \sigma(W_z \cdot x_t + U_z \cdot h_{t-1}) \qquad (12)$$

$$r_t = \sigma(W_r \cdot x_t + U_r \cdot h_{t-1}) \qquad (13)$$

$$h_h = \tanh(W_h \cdot x_t + r_t \odot (U_h \cdot h_{t-1})) \qquad (14)$$

$$h_t = z_t \odot h_{t-1} + (1- z_t) \odot h_h \qquad (15)$$

In Equations (12)-(15), the following notation is used:

$x_{t-1}$: ML model input at time t-1;
$h_{t-1}$: previous GRU layer output (at time t-1);
$h_t$: current GRU layer output (at time t);
$\sigma$: recurrent activation function (e.g., a sigmoid; e.g., $\sigma(v) = 0$ for v < 0, $\sigma(0) = 0.5$,
$\sigma(v) = 1$ for v > 0);
$h_h$: candidate for next GRU cell state;
$W_z, W_r, W_h$: kernel weights;
$U_z, U_r, U_h$: recurrent weights;
$\odot$: Hadamard product.

Equations (12)-(14) may optionally include biases. Inclusion of the biases allows further fine-tuning of the ML model. Various modifications may be used. For illustration, an activation function other than a hyperbolic tangent may be used in Equation (14). For further illustration, the coefficient of $h_{t-1}$ and $h_h$ in Equation (15) may be exchanged.

Training the ML model may comprise adjusting one or several of kernel weights, recurrent weights, and/or biases of a GRU cell.

The generation of the decision logic may be performed automatically by a computing system.

Figure 18 is a block diagram of a computing system 130 comprising an interface 135, a storage device or memory 132, and one or several integrated circuit(s) (IC(s)) 131. The one or several IC(s) 131 may comprise one or several processors, controllers, application specific integrated circuit(s) (ASIC(s)), field programmable gate arrays (FPGAs), or combination(s) thereof.

The computing system 130 may be communicatively coupled via interface 135 to a storage device 140 storing training and/or test cases.

The computing system 130 may be operative to retrieve at least one training dataset comprising a plurality of training cases via interface 135. Each training case may comprise a training input time-series and a target output time-series. The at least one IC 131 is operative to initialize weighting functions, each weighting function being respectively associated with a training case of the plurality of training cases. The at least one IC 131 may be operative to perform an iterative procedure comprising several iterations that respectively comprise performing at least one training step for training at least one machine learning (ML) model that reduces a value of an aggregated loss function. The aggregated loss function may be dependent on loss functions for at least a sub-set of the training cases with each of the loss functions being respectively weighted by a weighting function associated with the respective training case. Each loss function may be dependent on a difference between the target output time-series of the respective training case and an output time-series provided by the ML model responsive to the training input time-series of the respective training case. The iterations of the iterative procedure may respectively comprise selectively modifying the weighting function(s) associated with one or several of the training cases between at least some successive iterations of the iterative procedure. The iterations of the iterative procedure may comprise using the modified weighting function(s) when performing at least one subsequent training step.

Candidate ML model(s) 134 and/or at least part of the training and/or test cases may be stored in the storage device 132 of the computing system 130.

The computing system 130 may be operative to store the generated decision logic for execution by the IED 30. The computing system 130 may be operative to output the decision logic, e.g. via interface 135, for storing and/or to otherwise deploy the generated decision logic to the IED 30.

In field use, the IED 30 may execute the decision logic. The decision logic may implement a distance protection or time domain protection function. The IED 30 may cause a corrective, protective, and/or mitigating action (such as CB trip or restrain) by processing electrical measurements, using the decision logic.

Example

A case study was performed based on reach calculation, which is an important component of time domain protection. It should again be noted that whilst power system protection is a preferred embodiment of this application, it is also applicable for a wider range of applications requiring classification of samples in a time / data series. Time domain protection reach defines the line length, within which if a fault occurs the function should trip the circuit breaker. The experiments show that weighting function adjustment can properly address the tradeoff between speed and accuracy, improving the overall performance. The study has been conducted on a simulated transmission overhead line of 400kV, where the relevant simulation parameters were drawn from preselected distributions. The fixed parameters of the simulations were:

- Line length 200km,
- Reach set to 70% of line length, 140km.

The varying parameters of simulations were:

- Fault location (3 - 97%),
- Fault resistance (0 - 20 Ohms),
- System source to line impedance ratio (0.1 - 1 [per unit]),
- Fault type: AG, BG, CG, AB, BC, CA, ABG, BCG, CAG, ABC, ABCG,
- Load conditions: -800A - 800A,
- Fault inception angle: 0 - 360 deg.

In total 30,000 simulations were generated, where 21,000 were used for training, and the trained ML model was tested on 9,000 cases which were not included in the training set. Performance metrics for decision logic based on machine learning which have 100% accurate decision for the 9,000 test set (i.e. no false alarms) show that, without adjustment of a weighting function during ML model training (Gaussian curve centered 5 ms after the fault inception for all cases) results in a reach speed calculation in a time of 3.51 ms. An ML model training with automatic adjustment of the weighting functions was performed for comparison. The portion 73 of the weighting function 70 being initially centered 5 ms after the fault inception and was automatically moved relative to the fault inception for each case. The reach speed calculation of the obtained decision logic took 1.14 ms. I.e., the ML model reach calculation speed is 2.37 ms faster for the technique that implements an automatic adjustment of the weighting functions as compared to a fixed weighting function (e.g. training kernel).

Methods, systems, and devices disclosed herein provide a decision logic having good dependability and speed. The decision logic, obtained by iterative ML model training with automatic adjustment of weighting functions, can correctly distinguish between (training and actual) cases for which a longer period is required to achieve better prediction and the cases for which it can be achieved quickly. Various effects and advantages can be attained.

For illustration, the trained ML model is optimized in order to provide correct decisions as quickly as possible. Such attributes are critical in many monitoring and protection applications.

No manual or expert knowledge required in order to distinguish challenging training cases before training. This can be an arduous task with the possibility of erroneous data labeling, particularly if many multiple cases need to be included in the training set.

The procedure can be performed in a fully automated manner, as only moving weighting function parameters (e.g., training kernel) need to be tuned, such as: initial position, threshold for output and counter threshold that causes adjustment of the weighting function.

The position of the rising flank of the weighting function relative to the event occurrence is available after the training, which one can utilize to explore the challenging training cases for additional conclusions, and/or for training a dedicated model to solve subproblems.

While embodiments may be used for power system protection, the embodiments are not limited thereto.

**Claims**

1. A method of generating a decision logic (34) operative to process a time-series input and to generate a decision logic output, in particular for generating a decision logic (34) for an electric power system or industrial automation control system, wherein, the decision logic output is to be used in executing comprising triggering corrective, protective, and/or mitigating actions, the method being performed by at least one integrated circuit (131) and comprising:

retrieving, from a memory or storage medium (132; 140), at least one training dataset comprising a plurality of training cases, each training case comprising a training input time series (55; 56) and a target output time series (61); and
performing an iterative procedure comprising several iterations that respectively comprise:

performing at least one training step for training at least one machine learning, ML, model that reduces a value of an aggregated loss function, the aggregated loss function being dependent on loss functions for at least a sub-set of the training cases with each of the loss functions being respectively weighted by a weighting function (62; 70; 82) associated with the respective training case, each loss function being dependent on a difference between the target output time series (61) of the respective training case and an output time series (61) provided by the ML model responsive to the training input time series (55; 56) of the respective training case;
selectively modifying the weighting function(s) (62; 70) associated with one or several of the training cases between at least some successive iterations of the iterative procedure; and

using the modified weighting function(s) (62'; 62") when performing at least one subsequent training step, wherein the method further comprises initializing the weighting functions (62; 70; 82) before performing the iterative procedure.

2. The method of claim 1, further comprising terminating the iterative procedure in response to determining that a termination criterion is fulfilled and storing an ML model of the at least one ML model trained in the iterative procedure as decision logic (34) for execution by at least one decision-making device, in particular for execution by an Intelligent Electronic Device, IED (30).

3. The method of claim 1 or claim 2, wherein selectively modifying the weighting function(s) (62; 70) comprises modifying weighting functions (62; 70) associated with different training cases independently of each other.

4. The method of any one of the preceding claims, wherein selectively modifying the weighting function(s) (62; 70) comprises shifting at least a rising flank (63) of the weighting function (62; 70; 82) associated with a training case relative to sample times of the target output time series (61) of the training case.

5. The method of claim 4, wherein the target output time series (61) of the training case changes its value at a sample time (67), and wherein shifting at least the rising flank (63) comprises reducing a delay (69; 69') of the rising flank (63) of the weighting function (62; 70; 82) relative to the sample time (67) at which the target output time series (61) changes its value.

6. The method of claim 5, wherein the weighting function (62; 70) has weighting function values that, for sample times between the time (67) at which the target output time series (61) changes its value and an onset time (68) of the rising flank (63) of the weighting function, are smaller than weighting function values for sample times prior to the sample time (67) at which the target output time series (61) changes its value and/or weighting function values for sample times subsequent to the onset time (67) of the rising flank of the weighting function.

7. The method of claim 5 or claim 6, wherein the weighting function (62; 70) is zero for sample times between the sample time (67) at which the target output time series (61) changes its value and the onset time (68) of the rising flank (63) of the weighting function (62; 70).

8. The method of any one of claims 5 to 7, wherein the delay (69) is decremented in several steps in the iterative procedure.

9. The method of any one of the preceding claims, wherein selectively modifying the weighting function(s) (62; 70) associated with one or several of the training cases comprises:

determining that a modification criterion is fulfilled for the one or several of the training cases; and
modifying the weighting function(s) (62; 70) associated with the one or several of the training cases for which the modification criterion is fulfilled,

optionally wherein determining that the modification criterion is fulfilled comprises determining that a number of correct classifications fulfills a threshold comparison criterion.

10. The method of any one of the preceding claims, wherein the weighting functions (62; 70) comprise first weighting functions (62; 70) associated with training cases in which the target output time series (61) varies and second weighting functions (82) associated with training cases in which the target output time series (81) is constant, wherein initializing the weighting functions (62; 70; 82) comprises initializing the first weighting functions (62; 70) to have a dependency on sample time that is different from a dependency on sample time of the second weighting functions (82), optionally wherein initializing the weighting functions (62; 70; 82) comprises initializing the first weighting functions (62; 70) to vary as a function of sample time and initializing the second weighting functions (82) to be constant as a function of sample time.

11. The method of claim 10, wherein

the first and second weighting functions (62; 70; 82) are time-continuous functions and the first weighting functions (62; 70) are initialized such that a time-integral of each first weighting function (62; 70) depends on a time-integral of each second weighting function (82), the integrals being respectively computed over a time period representing a period defined by all sample times of the target output time series (61; 81) of the training cases; or the first and second weighting functions (62; 70; 82) are time-discrete functions and the first weighting functions (62; 70) are initialized such that a sum of values of each first weighting function (62; 70) depends on a sum of values of each second weighting function (82), the sums being respectively computed by a summation of the weighting function values for all sample times represented by the target output time series (61; 81) of the training cases.

12. The method of any one of the preceding claims, wherein each ML model of the at least one ML model has

an input layer (111) operative to receive one or several time series representative of electrical characteristics of an electric power system, and an output layer (113) operative to output a protection command for performing a protective or corrective action for an asset of the electric power system, optionally wherein the decision logic (34) is a distance protection or time domain protection logic (34), the one or several time series representative of electrical characteristics comprise current and/or voltage measurements for one or several phases or features determined from current and/or voltage measurements for one or several phases, and the protection command is operative to change between values corresponding to circuit breaker trip and restrain, and/or wherein each ML model of the at least one ML model further comprises at least one recurrent neural network layer (112), in particular a long short-term memory, LSTM, layer or gated recurrent unit, GRU, cell (120).

13. A method of performing asset protection or monitoring, comprising:

generating a decision logic (34) for an intelligent electronic device, IED (30), using the method of any one of the claims 1 to 12; and storing the decision logic (34) in a memory or storage device of the IED (30) for execution by the IED; wherein the method optionally further comprises executing, by the IED (30), the decision logic (34), comprising triggering corrective, protective, and/or mitigating actions responsive to the decision logic output.

14. A system (130) for generating a decision logic (34) configured to process a time-series input and to generate a decision logic output, in particular for generating a decision logic (34) for an electric power system or industrial automation control system, wherein, the decision logic output is to be used in executing comprising triggering corrective, protective, and/or mitigating actions, the system (130) comprising:

an interface (135) configured to retrieve, from a memory or storage medium (140), at least one training dataset comprising a plurality of training cases, each training case comprising a training input time series (55; 56) and a target output time series (61); and at least one integrated circuit (131) configured to: perform an iterative procedure comprising several iterations that respectively comprise:

performing at least one training step for training at least one machine learning, ML, model that reduces a value of an aggregated loss function, the aggregated loss function being dependent on loss functions for at least a sub-set of the training cases with each of the loss functions being respectively weighted by a weighting function (62; 70; 82) associated with the respective training case, each loss function being dependent on a difference between the target output time series (61) of the respective training case and an output time series (61) provided by the ML model responsive to the training input time series (55; 56) of the respective training case;

selectively modifying the weighting function(s) (62; 70) associated with one or several of the training cases between at least some successive iterations of the iterative procedure; and

the at least one integrated circuit (131) is further configured to use the modified weighting function(s) (62'; 62") when performing at least one subsequent training step, and to initialize the weighting functions (62; 70; 82) before performing the iterative procedure.

**15.** An electric power system (10), comprising:

an intelligent electronic device, IED (30); and
the system (130) of claim 14 configured to generate a decision logic (34) and to provide the decision logic (34) to the IED (30) for execution.

## Patentansprüche

**1.** Verfahren zum Erzeugen einer Entscheidungslogik (34), die betreibbar ist, um eine Zeitreiheneingabe zu verarbeiten und eine Entscheidungslogikausgabe zu erzeugen, insbesondere zum Erzeugen einer Entscheidungslogik (34) für ein elektrisches Leistungssystem oder ein industrielles Automatisierungssteuersystem, wobei die Entscheidungslogikausgabe beim Ausführen verwendet werden soll, das ein Auslösen von Korrektur-, Schutz- und/oder Abschwächungsmaßnahmen umfasst, wobei das Verfahren durch mindestens eine integrierte Schaltung (131) durchgeführt wird und Folgendes umfasst:

Abrufen, aus einem Speicher oder Speichermedium (132; 140), mindestens eines Trainingsdatensatzes, der mehrere Trainingsfälle umfasst, wobei jeder Trainingsfall eine Trainingseingabezeitreihe (55; 56) und eine Zielausgabezeitreihe (61) umfasst; und
Durchführen eines iterativen Vorgangs, der mehrere Iterationen umfasst, die jeweils Folgendes umfassen:

Durchführen mindestens eines Trainingsschritts zum Trainieren mindestens eines Maschinenlernmodells, ML-Modells, das einen Wert einer aggregierten Verlustfunktion reduziert, wobei die aggregierte Verlustfunktion von Verlustfunktionen für mindestens eine Untermenge der Trainingsfälle abhängt, wobei jede der Verlustfunktionen jeweils durch eine Gewichtungsfunktion gewichtet wird (62; 70; 82), die dem jeweiligen Trainingsfall zugeordnet ist, wobei jede Verlustfunktion von einer Differenz zwischen der Zielausgabezeitreihe (61) des jeweiligen Trainingsfalls und einer Ausgabezeitreihe (61) abhängt, die durch das ML-Modell als Reaktion auf die Trainingseingabezeitreihe (55; 56) des jeweiligen Trainingsfalls bereitgestellt wird;
selektives Modifizieren der Gewichtungsfunktion(en) (62; 70), die einem oder mehreren der Trainingsfälle zugeordnet ist/sind, zwischen mindestens einigen aufeinanderfolgenden Iterationen des iterativen Vorgangs; und

Verwenden der modifizierten Gewichtungsfunktion(en) (62'; 62") beim Durchführen mindestens eines nachfolgenden Trainingsschritts,
wobei das Verfahren ferner das Initialisieren der Gewichtungsfunktionen (62; 70; 82) vor dem Durchführen des iterativen Vorgangs umfasst.

**2.** Verfahren nach Anspruch 1, das ferner das Beenden des iterativen Vorgangs als Reaktion auf das Bestimmen umfasst, dass ein Beendigungskriterium erfüllt ist, und das Speichern eines ML-Modells des mindestens einen ML-Modells, das in dem iterativen Vorgang trainiert ist, als Entscheidungslogik (34) zur Ausführung durch mindestens eine Vorrichtung zur Entscheidungsfindung, insbesondere zur Ausführung durch eine intelligente elektronische Vorrichtung, IED (30).

**3.** Verfahren nach Anspruch 1 oder Anspruch 2, wobei das selektive Modifizieren der Gewichtungsfunktion(en) (62; 70) das Modifizieren von Gewichtungsfunktionen (62; 70) umfasst, die verschiedenen Trainingsfällen unabhängig voneinander zugeordnet sind.

4. Verfahren nach einem der vorhergehenden Ansprüche, wobei das selektive Modifizieren der Gewichtungsfunktion(en) (62; 70) das Verschieben mindestens einer ansteigenden Flanke (63) der Gewichtungsfunktion (62; 70; 82), die einem Trainingsfall zugeordnet ist, relativ zu Abtastzeiten der Zielausgabezeitreihe (61) des Trainingsfalls umfasst.

5. Verfahren nach Anspruch 4, wobei die Zielausgabezeitreihe (61) des Trainingsfalls ihren Wert zu einer Abtastzeit (67) ändert, und wobei das Verschieben mindestens der ansteigenden Flanke (63) das Reduzieren einer Verzögerung (69; 69') der ansteigenden Flanke (63) der Gewichtungsfunktion (62; 70; 82) relativ zu der Abtastzeit (67), zu der die Zielausgabezeitreihe (61) ihren Wert ändert, umfasst.

6. Verfahren nach Anspruch 5, wobei die Gewichtungsfunktion (62; 70) Gewichtungsfunktionswerte aufweist, die für Abtastzeiten zwischen der Zeit (67), zu der die Zielausgabezeitreihe (61) ihren Wert ändert, und einer Anfangszeit (68) der ansteigenden Flanke (63) der Gewichtungsfunktion, kleiner sind als Gewichtungsfunktionswerte für Abtastzeiten vor dem Abtastzeitpunkt (67), bei dem die Zielausgabezeitreihe (61) ihren Wert ändert und/oder Gewichtungsfunktionswerte für Abtastzeiten nach dem Anfangszeitpunkt (67) der ansteigenden Flanke der Gewichtungsfunktion.

7. Verfahren nach Anspruch 5 oder Anspruch 6, wobei die Gewichtungsfunktion (62; 70) für Abtastzeiten zwischen der Abtastzeit (67), zu der die Zielausgabezeitreihe (61) ihren Wert ändert, und der Anfangszeit (68) der ansteigenden Flanke (63) der Gewichtungsfunktion (62; 70) null ist.

8. Verfahren nach einem der Ansprüche 5 bis 7, wobei die Verzögerung (69) in mehreren Schritten in dem iterativen Vorgang dekrementiert wird.

9. Verfahren nach einem der vorhergehenden Ansprüche, wobei das selektive Modifizieren der Gewichtungsfunktion(en) (62; 70), die einem oder mehreren der Trainingsfälle zugeordnet ist, Folgendes umfasst:

   Bestimmen, dass ein Modifizierungskriterium für den einen oder die mehreren der Trainingsfälle erfüllt ist; und
   Modifizieren der Gewichtungsfunktion(en) (62; 70), die dem einen oder mehreren der Trainingsfälle zugeordnet ist/sind, für die das Modifizierungskriterium erfüllt ist,
   wobei optional das Bestimmen, dass das Modifizierungskriterium erfüllt ist, das Bestimmen umfasst, dass eine Anzahl von korrekten Klassifizierungen ein Schwellenwertvergleichskriterium erfüllt.

10. Verfahren nach einem der vorhergehenden Ansprüche, wobei die Gewichtungsfunktionen (62; 70) erste Gewichtungsfunktionen (62; 70), die Trainingsfällen zugeordnet sind, in denen die Zielausgabezeitreihe (61) variiert, und zweite Gewichtungsfunktionen (82), die Trainingsfällen zugeordnet sind, in denen die Zielausgabezeitreihe (81) konstant ist, umfassen, wobei das Initialisieren der Gewichtungsfunktionen (62; 70; 82) das Initialisieren der ersten Gewichtungsfunktionen (62; 70) umfasst, eine Abhängigkeit von der Abtastzeit aufzuweisen, die sich von einer Abhängigkeit von der Abtastzeit der zweiten Gewichtungsfunktionen (82) unterscheidet, wobei optional das Initialisieren der Gewichtungsfunktionen (62; 70; 82) das Initialisieren der ersten Gewichtungsfunktionen (62; 70) umfasst, um als eine Funktion der Abtastzeit zu variieren, und das Initialisieren der zweiten Gewichtungsfunktionen (82), um als eine Funktion der Abtastzeit konstant zu sein.

11. Verfahren nach Anspruch 10, wobei

   die erste und die zweite Gewichtungsfunktion (62; 70; 82) zeitkontinuierliche Funktionen sind und die ersten Gewichtungsfunktionen (62; 70) so initialisiert werden, dass ein Zeitintegral jeder ersten Gewichtungsfunktion (62; 70) von einem Zeitintegral jeder zweiten Gewichtungsfunktion (82) abhängt, wobei die Integrale jeweils über einen Zeitraum berechnet werden, der eine Periode repräsentiert, die durch alle Abtastzeiten der Zielausgabezeitreihe (61; 81) der Trainingsfälle definiert ist; oder
   die erste und die zweite Gewichtungsfunktion (62; 70; 82) zeitdiskrete Funktionen sind und die ersten Gewichtungsfunktionen (62; 70) so initialisiert werden, dass eine Summe von Werten jeder ersten Gewichtungsfunktion (62; 70) von einer Summe von Werten jeder zweiten Gewichtungsfunktion (82) abhängt, wobei die Summen jeweils durch eine Summierung der Gewichtungsfunktionswerte für alle Abtastzeiten berechnet werden, die durch die Zielausgabezeitreihe (61; 81) der Trainingsfälle repräsentiert werden.

12. Verfahren nach einem der vorhergehenden Ansprüche, wobei jedes ML-Modell des mindestens einen ML-Modells Folgendes aufweist:

eine Eingabeschicht (111), die betreibbar ist, um eine oder mehrere Zeitreihen zu empfangen, die elektrische Charakteristiken eines elektrischen Leistungssystems repräsentieren, und

eine Ausgabeschicht (113), die betreibbar ist, um einen Schutzbefehl zum Durchführen einer Schutz- oder Korrekturmaßnahme für ein Asset des elektrischen Leistungssystems auszugeben,

optional

wobei die Entscheidungslogik (34) eine Abstandsschutz- oder Zeitbereichsschutzlogik (34) ist, die eine oder mehrere Zeitreihen, die elektrische Charakteristiken repräsentieren, Strom- und/oder Spannungsmessungen für eine oder mehrere Phasen oder Merkmale umfasst, die aus Strom- und/oder Spannungsmessungen für eine oder mehrere Phasen bestimmt werden, und der Schutzbefehl betreibbar ist, um zwischen Werten zu ändern, die dem Auslösen und Zurückhalten des Leistungsschalters entsprechen, und/oder

wobei jedes ML-Modell des mindestens einen ML-Modells ferner mindestens eine rekurrente neuronale Netzwerkschicht (112), insbesondere eine Long-Short-Term-Memory-, LSTM-, Schicht- oder Gated-Rekurrent-Unit-, GRU-, Zelle (120) umfasst.

13. Verfahren zum Durchführen von Asset-Schutz oder - Überwachen, das Folgendes umfasst:

Erzeugen einer Entscheidungslogik (34) für eine intelligente elektronische Vorrichtung, IED (30), unter Verwendung des Verfahrens nach einem der Ansprüche 1 bis 12; und

Speichern der Entscheidungslogik (34) in einem Speicher oder einer Speichervorrichtung der IED (30) zur Ausführung durch die IED;

wobei das Verfahren optional ferner das Ausführen, durch den IED (30), der Entscheidungslogik (34) umfasst, die das Auslösen von Korrektur-, Schutz- und/oder Abschwächungsmaßnahmen als Reaktion auf die Entscheidungslogikausgabe umfasst.

14. System (130) zum Erzeugen einer Entscheidungslogik (34), die dazu ausgelegt ist, eine Zeitreiheneingabe zu verarbeiten und eine Entscheidungslogikausgabe zu erzeugen, insbesondere zum Erzeugen einer Entscheidungslogik (34) für ein elektrisches Leistungssystem oder ein industrielles Automatisierungssteuersystem, wobei die Entscheidungslogikausgabe beim Ausführen verwendet werden soll, die das Auslösen von Korrektur-, Schutz- und/oder Abschwächungsmaßnahmen umfasst, wobei das System (130) Folgendes umfasst:

eine Schnittstelle (135), die dazu ausgelegt ist, aus einem Speicher oder Speichermedium (140) mindestens einen Trainingsdatensatz abzurufen, der mehrere Trainingsfälle umfasst, wobei jeder Trainingsfall eine Trainingseingabezeitreihe (55; 56) und eine Zielausgabezeitreihe (61) umfasst; und

mindestens eine integrierte Schaltung (131), die dazu ausgelegt ist:

einen iterativen Vorgang durchzuführen, der mehrere Iterationen umfasst, die jeweils Folgendes umfassen:

Durchführen mindestens eines Trainingsschritts zum Trainieren mindestens eines Maschinenlernmodells, ML-Modells, das einen Wert einer aggregierten Verlustfunktion reduziert, wobei die aggregierte Verlustfunktion von Verlustfunktionen für mindestens eine Untermenge der Trainingsfälle abhängt, wobei jede der Verlustfunktionen jeweils durch eine Gewichtungsfunktion gewichtet wird (62; 70; 82), die dem jeweiligen Trainingsfall zugeordnet ist, wobei jede Verlustfunktion von einer Differenz zwischen der Zielausgabezeitreihe (61) des jeweiligen Trainingsfalls und einer Ausgabezeitreihe (61) abhängt, die durch das ML-Modell als Reaktion auf die Trainingseingabezeitreihe (55; 56) des jeweiligen Trainingsfalls bereitgestellt wird;

selektives Modifizieren der Gewichtungsfunktion(en) (62; 70), die einem oder mehreren der Trainingsfälle zugeordnet ist/sind, zwischen mindestens einigen aufeinanderfolgenden Iterationen des iterativen Vorgangs; und

die mindestens eine integrierte Schaltung (131) ferner dazu ausgelegt ist, die modifizierte Gewichtungsfunktion (en) (62'; 62") beim Durchführen mindestens eines nachfolgenden Trainingsschritts zu verwenden und die Gewichtungsfunktionen (62; 70; 82) vor dem Durchführen des iterativen Vorgangs zu initialisieren.

15. Elektrisches Leistungssystem (10), das Folgendes umfasst:

eine intelligente elektronische Vorrichtung, IED (30); und

das System (130) nach Anspruch 14, das dazu ausgelegt ist, eine Entscheidungslogik (34) zu erzeugen und die Entscheidungslogik (34) der IED (30) zur Ausführung bereitzustellen.

**Revendications**

1. Procédé de génération d'une logique de décision (34) permettant de traiter une entrée de série chronologique et de générer une sortie de logique de décision, en particulier pour générer une logique de décision (34) pour un système d'alimentation électrique ou un système de commande d'automatisation industrielle, où la sortie de logique de décision doit être utilisée pour une exécution comprenant le déclenchement d'actions correctives, protectrices et/ou atténuantes, le procédé étant exécuté par au moins un circuit intégré (131) et comprenant les étapes suivantes :

   extraire, à partir d'une mémoire ou d'un support de stockage (132 ; 140), au moins un ensemble de données d'apprentissage comprenant une pluralité de cas d'entraînement, chaque cas d'entraînement comprenant une série chronologique d'entrée d'entraînement (55 ; 56) et une série chronologique de sortie cible (61) ; et exécuter une procédure itérative comprenant plusieurs itérations qui comprennent respectivement les étapes suivantes :

   réaliser au moins une étape d'entraînement pour l'entraînement d'au moins un modèle d'apprentissage automatique, ML, qui réduit une valeur d'une fonction de perte agrégée, la fonction de perte agrégée dépendant de fonctions de perte pour au moins un sous-ensemble des cas d'entraînement, chacune des fonctions de perte étant pondérée respectivement par une fonction de pondération (62 ; 70 ; 82) associée au cas d'entraînement respectif, chaque fonction de perte dépendant d'une différence entre la série chronologique de sortie cible (61) du cas d'entraînement respectif et une série chronologique de sortie (61) fournie par le modèle ML en réponse à la série chronologique d'entrée d'entraînement (55 ; 56) du cas d'entraînement respectif ;
   modifier sélectivement les une ou plusieurs fonctions de pondération (62 ; 70) associées à un ou plusieurs des cas d'entraînement entre au moins quelques itérations successives de la procédure itérative ; et
   utiliser les une ou plusieurs fonctions de pondération modifiées (62' ; 62") lors de l'exécution d'au moins une étape d'entraînement ultérieure,
   où le procédé comprend en outre d'initialiser les fonctions de pondération (62 ; 70 ; 82) avant d'exécuter la procédure itérative.

2. Procédé selon la revendication 1, comprenant en outre d'achever la procédure itérative en réponse à la détermination qu'un critère de terminaison est rempli et de stocker un modèle ML de l'au moins un modèle ML entraîné dans la procédure itérative en tant que logique de décision (34) pour exécution par au moins un dispositif de prise de décision, en particulier pour exécution par un dispositif électronique intelligent, IED (30).

3. Procédé selon la revendication 1 ou la revendication 2, dans lequel la modification sélective des une ou plusieurs fonctions de pondération (62 ; 70) comprend la modification de fonctions de pondération (62 ; 70) associées à différents cas d'entraînement indépendamment les uns des autres.

4. Procédé selon l'une quelconque des revendications précédentes, dans lequel la modification sélective des une ou plusieurs fonctions de pondération (62 ; 70) comprend de décaler au moins un flanc montant (63) de la fonction de pondération (62 ; 70 ; 82) associée à un cas d'entraînement par rapport aux temps d'échantillonnage de la série chronologique de sortie cible (61) du cas d'entraînement.

5. Procédé selon la revendication 4, dans lequel la série chronologique de sortie cible (61) du cas d'entraînement change sa valeur à un temps d'échantillonnage (67), et dans lequel le décalage d'au moins le flanc montant (63) comprend la réduction d'un retard (69 ; 69') du flanc montant (63) de la fonction de pondération (62 ; 70 ; 82) par rapport au temps d'échantillonnage (67) auquel la série chronologique de sortie cible (61) change sa valeur.

6. Procédé selon la revendication 5, dans lequel la fonction de pondération (62 ; 70) a des valeurs de fonction de pondération qui, pour des temps d'échantillonnage entre le temps (67) auquel la série chronologique de sortie cible (61) change de valeur et un temps de début (68) du flanc montant (63) de la fonction de pondération, sont inférieures aux valeurs de la fonction de pondération pour les temps d'échantillonnage antérieurs au temps d'échantillonnage (67) auquel la série chronologique de sortie cible (61) change sa valeur et/ou les valeurs de la fonction de pondération pour les temps d'échantillonnage postérieurs au temps de début (67) du flanc montant de la fonction de pondération.

7. Procédé selon la revendication 5 ou la revendication 6, dans lequel la fonction de pondération (62 ; 70) est nulle pour les temps d'échantillonnage entre le temps d'échantillonnage (67) auquel la série chronologique de sortie cible (61) change de valeur et le temps de début (68) du flanc montant (63) de la fonction de pondération (62 ; 70).

**8.** Procédé selon l'une quelconque des revendications 5 à 7, dans lequel le retard (69) est décrémenté en plusieurs étapes dans la procédure itérative.

**9.** Procédé selon l'une quelconque des revendications précédentes, dans lequel la modification sélective des une ou plusieurs fonctions de pondération (62 ; 70) associées à un ou plusieurs des cas d'entraînement comprend les étapes suivantes :

déterminer si un critère de modification est rempli pour les un ou plusieurs cas parmi les cas d'entraînement ; et modifier les une ou plusieurs fonctions de pondération (62 ; 70) associées aux un ou plusieurs cas parmi les cas d'entraînement pour lesquels le critère de modification est rempli, où, éventuellement, la détermination du fait que le critère de modification est satisfait comprend de déterminer qu'un certain nombre de classifications correctes satisfait un critère de comparaison de seuil.

**10.** Procédé selon l'une quelconque des revendications précédentes, dans lequel les fonctions de pondération (62 ; 70) comprennent des premières fonctions de pondération (62 ; 70) associées à des cas d'entraînement dans lesquels la série chronologique de sortie cible (61) varie et des deuxièmes fonctions de pondération (82) associées à des cas d'entraînement dans lesquels la série chronologique de sortie cible (81) est constante, où l'initialisation des fonctions de pondération (62 ; 70 ; 82) comprend l'initialisation des premières fonctions de pondération (62 ; 70) pour avoir une dépendance au temps d'échantillonnage différente d'une dépendance au temps d'échantillonnage des deuxièmes fonctions de pondération (82), où, éventuellement, l'initialisation des fonctions de pondération (62 ; 70 ; 82) comprend l'initialisation des premières fonctions de pondération (62 ; 70) pour varier en fonction du temps d'échantillonnage et l'initialisation des deuxièmes fonctions de pondération (82) pour être constantes en fonction du temps d'échantillonnage.

**11.** Procédé selon la revendication 10, dans lequel

les première et deuxième fonctions de pondération (62 ; 70 ; 82) sont des fonctions continues dans le temps et les premières fonctions de pondération (62 ; 70) sont initialisées de telle sorte qu'une intégrale chronologique de chaque première fonction de pondération (62 ; 70) dépend d'une intégrale chronologique de chaque deuxième fonction de pondération (82), les intégrales étant respectivement calculées sur une période représentant une période définie par tous les temps échantillons de la série chronologique de sortie cible (61 ; 81) des cas d'entraînement ; ou les première et deuxième fonctions de pondération (62 ; 70 ; 82) sont des fonctions discrètes dans le temps et les premières fonctions de pondération (62 ; 70) sont initialisées de sorte qu'une somme des valeurs de chaque première fonction de pondération (62 ; 70) dépend d'une somme des valeurs de chaque deuxième fonction de pondération (82), les sommes étant respectivement calculées par sommation des valeurs de fonction de pondération pour tous les temps d'échantillonnage représentés par la série chronologique de sortie cible (61 ; 81) des cas d'entraînement.

**12.** Procédé selon l'une quelconque des revendications précédentes, dans lequel chaque modèle ML de l'au moins un modèle ML a

une couche d'entrée (111) permettant de recevoir une ou plusieurs séries chronologiques représentatives des caractéristiques électriques d'un système d'alimentation électrique, et une couche de sortie (113) permettant d'émettre une commande de protection pour effectuer une action de protection ou de correction pour un actif du système d'alimentation électrique, éventuellement où la logique de décision (34) est une logique de protection de distance ou de protection de domaine temporel (34), les une ou plusieurs séries chronologiques représentatives des caractéristiques électriques comprennent des mesures de courant et/ou de tension pour une ou plusieurs phases ou des caractéristiques déterminées à partir de mesures de courant et/ou de tension pour une ou plusieurs phases, et la commande de protection permet de changer entre des valeurs correspondant au déclenchement du disjoncteur et au maintien du disjoncteur, et/ou où chaque modèle ML de l'au moins un modèle ML comprend en outre au moins une couche de réseau neuronal récurrent (112), en particulier une couche de mémoire à court et long terme, LSTM, ou une cellule d'unité récurrente à portes, GRU (120).

**13.** Procédé de protection ou de surveillance des actifs, comprenant les étapes suivantes :

générer une logique de décision (34) pour un dispositif électronique intelligent, IED (30), en utilisant le procédé selon l'une quelconque des revendications 1 à 12 ; et

stocker la logique de décision (34) dans une mémoire ou un dispositif de stockage de l'IED (30) pour exécution par l'IED ;

où le procédé comprend éventuellement en outre d'exécuter, par l'IED (30), la logique de décision (34), ce qui comprend le déclenchement d'actions correctives, protectrices et/ou atténuantes en réponse à la sortie de logique de décision.

14. Système (130) de génération d'une logique de décision (34) configurée pour traiter une entrée de série chronologique et pour générer une sortie de logique de décision, en particulier pour générer une logique de décision (34) pour un système d'alimentation électrique ou un système de commande d'automatisation industrielle, la sortie de logique de décision étant destinée à être utilisée pour exécuter des actions comprenant de déclencher des actions correctives, protectrices et/ou atténuantes, le système (130) comprenant :

une interface (135) configurée pour extraire, à partir d'une mémoire ou d'un support de stockage (140), au moins un ensemble de données d'entraînement comprenant une pluralité de cas d'entraînement, chaque cas d'entraînement comprenant une série chronologique d'entrée d'entraînement (55 ; 56) et une série chronologique de sortie cible (61) ; et

au moins un circuit intégré (131) configuré pour :

exécuter une procédure itérative comprenant plusieurs itérations qui comprennent respectivement les étapes suivantes :

réaliser au moins une étape d'entraînement pour l'entraînement d'au moins un modèle d'apprentissage automatique, ML, qui réduit une valeur d'une fonction de perte agrégée, la fonction de perte agrégée dépendant de fonctions de perte pour au moins un sous-ensemble des cas d'entraînement, chacune des fonctions de perte étant pondérée respectivement par une fonction de pondération (62 ; 70 ; 82) associée au cas d'entraînement respectif, chaque fonction de perte dépendant d'une différence entre la série chronologique de sortie cible (61) du cas d'entraînement respectif et une série chronologique de sortie (61) fournie par le modèle ML en réponse à la série chronologique d'entrée d'entraînement (55 ; 56) du cas d'entraînement respectif ;

modifier sélectivement les une ou plusieurs fonctions de pondération (62 ; 70) associées à un ou plusieurs des cas d'entraînement entre au moins quelques itérations successives de la procédure itérative ; et

l'au moins un circuit intégré (131) est en outre configuré pour utiliser les une ou plusieurs fonctions de pondération modifiées (62' ; 62") lors de l'exécution d'au moins une étape d'entraînement ultérieure, et pour initialiser les fonctions de pondération (62 ; 70 ; 82) avant l'exécution de la procédure itérative.

15. Système d'alimentation électrique (10) comprenant :

un dispositif électronique intelligent, IED (30) ; et

le système (130) selon la revendication 14, configuré pour générer une logique de décision (34) et pour fournir la logique de décision (34) à l'IED (30) pour exécution.

FIG. 1

```
                                                            ⌐40
  ┌─────────────────────────────────────┐  ⌐41
  │  Initialization of weighting functions │
  └─────────────────────────────────────┘
                    │
                    ▼
  ┌─────────────────────────────────────┐  ⌐42
  │  ML model training step(s) using weighting │
  │  functions for calculating aggregated loss │
  │               function              │
  └─────────────────────────────────────┘
                    │
                    ▼
  ┌─────────────────────────────────────┐  ⌐43
  │  Adjusting one or several weighting │
  │            function(s)              │
  └─────────────────────────────────────┘
                    │
                    ▼
                    ◇  ⌐44
         NO      ◇       ◇
              ◇   ML model   ◇
              ◇  acceptable?  ◇
                ◇         ◇
                    ◇
                    │ YES
                    ▼
  ┌─────────────────────────────────────┐  ⌐45
  │          Deploying ML model         │
  └─────────────────────────────────────┘
```

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

101

Input(s) → ML model → ML model output → Counter-threshold-counter mechanism → Output

102

34

**FIG. 15**

111

112

113

110

Input

Output

**FIG. 16**

120

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020409323 A1
- US 2021264111 A1

- US 2017344900 A1